# EUROPEAN PATENT SPECIFICATION

(11) **EP 4 135 448 B1**
(45) Date of publication and mention of the grant of the patent: **07.01.2026**
(21) Application number: 21784810.0
(22) Date of filing: 09.04.2021
(51) Int. Cl.: H04W 72/04

(54) **HARQ-ACK FEEDBACK METHOD AND APPARATUS, TERMINAL AND BASE STATION**
HARQ-ACK-FEEDBACKVERFAHREN UND -VORRICHTUNG, ENDGERÄT UND BASISSTATION
PROCÉDÉ ET APPAREIL DE RENVOI D'HARQ-ACK, TERMINAL ET STATION DE BASE

(30) Priority: 10.04.2020 CN 202010281099
(43) Date of publication of application: 15.02.2023
(73) Proprietor: Datang Mobile Communications Equipment Co., Ltd., Beijing 100085 (CN)
(72) Inventor: GAO, Xuejuan, Beijing 100083 (CN)
(74) Representative: Studio Torta S.p.A.
(86) International application number: PCT/CN2021/086154
(87) International publication number: WO 2021/204241

(56) References cited:
- WO-A1-2019/193700
- CN-A- 110 034 868
- CN-A- 110 324 132
- CN-A- 110 351 018
- LG ELECTRONICS: "Outcome of email thread [100e-NR-L1enh_URLLC-SPS_enh-02]", vol. RAN WG1, no. e-Meeting; 20200224 - 20200306, 5 March 2020 (2020-03-05), XP052344451, Retrieved from the Internet <URL:https://ftp.3gpp.org/tsg_ran/WG1_RL1/TSGR1_100_e/Docs/R1-2001383.zip R1-2001383 Outcome of email thread [100e-NR-L1enh_URLLC-SPS_enh-02].docx> [retrieved on 20200305]
- ASIA PACIFIC TELECOM: "Remaining issues on DL SPS enhancements", vol. RAN WG1, no. e-Meeting; 20200224 - 20200306, 14 February 2020 (2020-02-14), XP052343840, Retrieved from the Internet <URL:https://ftp.3gpp.org/tsg_ran/WG1_RL1/TSGR1_100_e/Docs/R1-2000776.zip R1-2000776 Remaining issues on DL SPS enhancements.docx> [retrieved on 20200214]
- LG ELECTRONICS: "Summary#2 on maintenance of other aspects for URLLC/IIOT", 3GPP DRAFT; R1-2001184, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 24 February 2020 (2020-02-24), Mobile Competence Centre ; 650, route des Lucioles ; F-06921 Sophia-Antipolis Cedex ; France , XP051853726
- "3rd Generation Partnership Project; Technical Specification Group Radio Access Network; NR; Physical layer procedures for control (Release 16)", 3GPP STANDARD; TECHNICAL SPECIFICATION; 3GPP TS 38.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V16.1.0, 3 April 2020 (2020-04-03), Mobile Competence Centre ; 650, route des Lucioles ; F-06921 Sophia-Antipolis Cedex ; France , pages 1 - 156, XP051893821

## Description

### CROSS REFERENCE OF RELATED APPLICATION

The present application claims a priority of Chinese patent application No. 202010281099.2 filed on April 10, 2020.

### TECHNICAL FIELD

The present disclosure relates to the field of wireless technologies, and in particular, to a HARQ-ACK feedback method and device, a terminal, and a base station.

### BACKGROUND

In the 5G NR (5^{th} Generation New Radio) system, Semi-Persistent Scheduling (SPS) Physical Downlink Shared CHannel (PDSCH) transmission and PDSCH (dynamic Downlink Control CHannel) transmission with a corresponding Physical Downlink Control CHannel (PDCCH) are supported, that is, the PDSCH is transmitted by one PDCCH schedule.

When there is a service to perform SPS transmission, the base station may activate the terminal to perform SPS transmission according to the SPS configured periodicity by transmitting a PDCCH indicating SPS activation. When the SPS resources are no longer needed, the base station may release the SPS resources allocated previously by sending the PDCCH indicating SPS resource release, and in order to ensure that the base station can accurately know whether the PDCCH indicating SPS resource release (which may also be referred to as SPS PDSCH release) is successfully received by the terminal, Hybrid Automatic Repeat Request-Acknowledgement (HARQ-ACK) feedback needs to be performed on the PDCCH indicating SPS resource release.

In R16, configuration of greater than 1 SPS transmission on one carrier (specifically, on one BandWidth Part (BWP) on one carrier) is supported, and the minimum period of each SPS may be 1 ms. When there are multiple SPS PDSCH transmissions corresponding to SPS configurations on a carrier, it may happen that there is at least one SPS PDSCH transmission corresponding to an SPS configuration in each slot. For a terminal that supports only a maximum of a (a is greater than or equal to 1) unicast PDSCH reception capabilities in one slot, when a =1, if the Release-15 (Release-15, abbreviated as R-15) mechanism is used, there may not be any slot that can transmit a PDCCH indicating SPS resource Release (since R-15 requires that the PDCCH indicating SPS resource Release and the PDSCH cannot be transmitted in the same slot when only one slot single unicast PDSCH reception capability is supported), resulting in failure to issue the PDCCH indicating SPS resource Release; for the case that a is greater than 1 (e.g., a =2, 4, 7), R-15 has no solution because R-15 does not occur in a slot where greater than 1 SPS PDSCH and one PDCCH indicating SPS resource release simultaneously exist, and R-16 has no position to perform HARQ-ACK feedback for the PDCCH indicating SPS resource release if only HARQ-ACK feedback positions corresponding to a PDSCH transmission opportunities are reserved for this slot, and if one or more PDCCHs indicating SPS resource release are received again in this slot when a SPS PDSCH transmission already exists in this slot, for the semi-persistent HARQ-ACK codebook feedback manner, there is no position to perform HARQ-ACK feedback for the PDCCH indicating SPS resource release; alternatively, if the number of SPS in a slot does not exceed a, but the number C of downlink transmission opportunities determined according to the TDRA table in the slot is smaller than the sum of the number of SPS and PDCCH indicating SPS resource release, HARQ-ACK feedback for the PDCCH indicating SPS resource release cannot be supported, because the actual HARQ-ACK position only supports a maximum of C downlink transmissions.

Therefore, in R-16, there is no clear method for HARQ-ACK feedback on a PDCCH indicating SPS resource release for a terminal that supports only a maximum a (a is greater than 1) unicast PDSCH reception capability in one slot, and HARQ-ACK feedback cannot be currently performed on a PDCCH indicating SPS resource release when the sum of the number of SPS in one slot and the number of PDCCHs indicating SPS resource release exceeds any of A or the number of downlink transmission opportunities C in the slot.

A contribution by LG Electronics, titled "Outcome of email thread", for the 3GPP TSG-RAN WG1 #100 e-Meeting, February 24th - March 6th, 2020, no. R1-2001383, discusses the outcome of the following email thread, and provides the TPs corresponding to the agreements, and gave some proposals and solutions.

A contribution by Asia Pacific Telecom, titled "Remaining issues on DL SPS enhancements", for the 3GPP TSG-RAN WG1 Meeting #100, February 24th - March 6th, 2020, no. R1-2000776, discusses the issues regarding HARQ-ACK feedback for SPS PDSCH. Based on the discussion in section 2, some observations and proposals are provided as follows. Observation 1: There is HARQ-ACK codebook size ambiguity when the PUCCH configured for HARQ-ACK corresponding to a SPS PDSCH of a SPS PDSCH configuration jointly released by a joint release DCI is located in a different slot (or sub-slot) than the PUCCH for HARQ-ACK corresponding to the joint release DCI. Proposal 1: If a SPS PDSCH starts N symbols after the end of a SPS PDSCH release DCI indicating release of the corresponding SPS configuration, then the HARQ-ACK for the SPS PDSCH is not transmitted. Proposal 2: For the case where the HARQ-ACK bit location are the same for a SPS PDSCH of a first SPS PDSCH configuration and for a SPS PDSCH release DCI indicating release of a second SPS PDSCH configuration, the HARQ-ACK bit for the SPS PDSCH release DCI is transmitted.

### SUMMARY

The scope of the invention is defined by the appended claims.

### BRIEF DESCRIPTION OF THE DRAWINGS

Fig. 1 is a schematic view showing the relationship between K0 and K1;
Fig. 2 is a flowchart illustrating an HARQ-ACK feedback method according to an embodiment of the present disclosure;
Fig. 3 is a schematic view of SLIV and determining downlink transmission opportunities;
Fig. 4 is a flowchart illustrating a HARQ-ACK feedback method according to another embodiment of the disclosure;
Fig. 5 is a schematic view of a slot structure according to an embodiment of the present disclosure;
Fig. 6 is a schematic view of a terminal according to an embodiment of the present disclosure;
Fig. 7 is a schematic view of a base station according to an embodiment of the present disclosure;
Fig. 8 is a schematic view of an HARQ-ACK feedback device according to an embodiment of the present disclosure; and
Fig. 9 is a schematic view of an HARQ-ACK feedback device according to another embodiment of the disclosure.

### DETAILED DESCRIPTION

To make the technical problems, technical solutions and advantages to be solved by the present disclosure clearer, the following detailed description is made with reference to the accompanying drawings and specific embodiments.

The embodiment of the disclosure provides a HARQ-ACK feedback method, which is used for mapping HARQ-ACK feedback of a PDCCH (physical downlink control channel) indicating SPS resource release according to a reference time domain resource when the PDCCH indicating SPS resource release is received in a slot for receiving PDSCH (physical downlink shared channel) transmission of semi-persistent scheduling SPS, so as to solve the problem that the HARQ-ACK feedback mode of the PDCCH indicating SPS resource release is ambiguous when related technologies support a plurality of SPS configurations.

In order to clearly illustrate the HARQ-ACK feedback method according to the embodiment of the present disclosure, an application scenario of the HARQ-ACK feedback method is described below first.

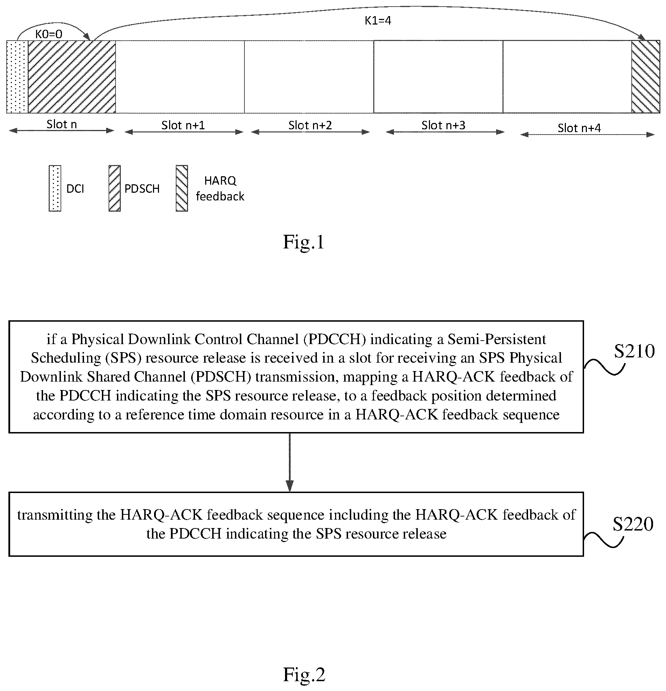

Flexible timing relationships are supported in current wireless communication systems. For a Physical Downlink Shared CHannel (PDSCH), a Physical Downlink Control CHannel (PDCCH) carrying Scheduling information thereof indicates a Scheduling timing relationship (K0) between the PDSCH and the PDCCH and a feedback timing relationship (HARQ-ACK timing, K1) between the PDSCH and its corresponding HARQ-ACK. Specifically, the time domain resource allocation indication field in the Downlink Control Information (DCI) format used by the PDCCH indicates a slot offset K0 between the slot in which the PDSCH is located and the slot in which the DCI is located; the PDSCH-to-HARQ-ACK feedback timing indication field in the DCI format indicates the number of slots K1 from the PDSCH end to the HARQ-ACK start, i.e., the PDSCH transmitted in slot n performs HARQ-ACK transmission in slot n+ K1, as shown in Fig. 1 below. The full set of K1 is {0,1,2,3,4,5,6,7,8,9,10,11,12,13,14,15}, and is typically configured to the terminal with a maximum of 8 values.

Semi-static (semi-static) and dynamic (dynamic) HARQ-ACK codebook (codebook) generation modes are also supported in the current communication system. The HARQ-ACK codebook is a HARQ-ACK feedback sequence generated for downlink transmission (including a PDSCH and a PDCCH indicating release of downlink SPS resources, and the PDCCH indicating release of downlink SPS resources may also be referred to as an SPS release PDCCH or an SPS PDSCH release) performing HARQ-ACK feedback on the same time domain position or uplink channel.

The semi-static HARQ-ACK codebook is a downlink transmission opportunity set corresponding to an uplink slot or sub-slot determined according to a K1 set and a downlink Time Domain Resource Allocation information table (i.e., Time Domain Resource Allocation (TDRA) table or set corresponding to (on active BWP of) each downlink carrier, where each row in the table represents a Time Domain scheduling condition and may provide information such as a starting symbol, the number of symbols, a scheduling timing sequence (i.e., K0), a semi-static uplink-downlink ratio (in a configured condition), and the number of times of PDSCH repeated transmission (in a configured condition).

The downlink transmission opportunity set is semi-static and does not change with specific scheduling conditions, so that according to the semi-static configured parameters, the downlink transmission opportunity set *M_{A,c}* on each downlink carrier corresponding to one uplink slot or sub-slot on the carrier for transmitting the PUCCH can be uniquely determined, and according to the *M_{A,c}* of each carrier, the HARQ-ACK information sequence transmitted through the same PUCCH in the uplink slot or sub-slot on the carrier for transmitting the PUCCH is determined, where the sequence length is the number of elements in the *M_{A,c}* and the HARQ-ACK feedback bit number corresponding to each transmission opportunity (element), and the sequencing of the HARQ-ACK feedback information is sequenced according to the position of the PDSCH in the sequence length.

Specifically, taking the case of PUCCH based on slot transmission as an example, for each carrier c, according to each K1 value in the K1 set, a slot set corresponding to slot n for HARQ-ACK feedback is determined; in each slot in the slot set, determining a downlink transmission opportunity corresponding to each slot according to whether the terminal supports receiving greater than one unicast PDSCH in the slot; if the terminal supports receiving greater than one unicast PDSCH in a slot, further based on various time domain positions in the TDRA table (one time domain position may be referred to as a Start and Length Indicator Value (SLIV), which expresses a combination of a Start symbol and the number of transmission symbols), the SLIVs are divided into multiple groups according to a predetermined rule according to a mutual overlapping condition, and each group may be considered to have a downlink transmission (this is because the overlapping SLIVs are only used for providing scheduling flexibility, but only one SLIV can be selected from the overlapping SLIVs to be used in actual scheduling, and two PDSCHs cannot be scheduled to use the overlapping SLIVs at the same time), so as to determine the maximum quantity of downlink transmissions in a slot.

If the terminal does not support receiving more than one unicast PDSCH in one slot, determining that the one slot corresponds to 1 downlink transmission opportunity; if a semi-static uplink and downlink slot structure is configured, if an uplink symbol exists in a symbol set contained in an SLIV in a slot, and due to the existence of uplink and downlink resource conflict, downlink transmission actually does not occur, the SLIV can be removed from the SLIV set, and only when the symbol determined according to downlink time domain resource allocation information in one slot is a downlink or flexible symbol, the downlink transmission can exist in the slot, and if all SLIVs in one slot are removed, the slot is removed; obtaining the *M_{A,c}* correspondence of each carrier according to the above mode, and determining the HARQ-ACK information sequence of the carrier c in the slot n according to *M*_{*A*,*c*}, where the HARQ-ACK information sequence includes the size of the sequence and the specific content and sequence of the HARQ-ACK; and finally, cascading the HARQ-ACK information sequences corresponding to each carrier together according to the sequence of the carrier numbers from small to large to form an HARQ-ACK codebook transmitted by the PUCCH in an uplink slot or a sub-slot of the carrier for transmitting the PUCCH by the terminal. Based on the determination rule of the HARQ-ACK codebook, when SPS PDSCH transmission is configured, because HARQ-ACK feedback needs to be carried out on the PDCCH for indicating SPS resource release, the above set *M_{A,c}* includes the PDCCH for indicating SPS resource release, and therefore the HARQ-ACK codebook includes the HARQ-ACK of the PDCCH for indicating SPS resource release.

On the basis of the rule, when there are SPS PDSCH transmissions corresponding to a plurality of SPS configurations on one carrier, there may be at least one SPS PDSCH transmission corresponding to an SPS configuration in each slot, and for a terminal that only supports maximum A (A is greater than 1) unicast PDSCH reception capabilities in one slot, it is further necessary to make explicit how to perform HARQ-ACK feedback on a PDCCH indicating SPS resource release.

As shown in Fig. 2, the HARQ-ACK feedback method according to an embodiment of the present disclosure is applied to a terminal, and includes:
S210: if a Physical Downlink Control Channel (PDCCH) indicating a Semi-Persistent Scheduling (SPS) resource release is received in a slot for receiving an SPS Physical Downlink Shared Channel (PDSCH) transmission, mapping a HARQ-ACK feedback of the PDCCH indicating the SPS resource release, to a feedback position determined according to a reference time domain resource in a HARQ-ACK feedback sequence;
S220: transmitting the HARQ-ACK feedback sequence including the HARQ-ACK feedback of the PDCCH indicating the SPS resource release.

According to the HARQ-ACK feedback method in the embodiment of the present disclosure, for a terminal which adopts semi-static HARQ-ACK codebook transmission and supports receiving A (A is greater than 1) unicast PDSCHs at most in one slot, the HARQ-ACK feedback of the PDCCH indicating the SPS resource release is mapped to a feedback position determined according to a reference time domain resource in a HARQ-ACK feedback sequence, thereby solving the technical in the related art that the HARQ-ACK feedback mode of the PDCCH indicating SPS resource release is ambiguous when multiple SPS configurations are supported.

It should be noted that, the SPS PDSCH required to be received here may not include all activated or configured SPS, but the remaining SPS PDSCH is filtered through a specific rule, that is, the SPS PDSCH required to be received in the embodiment of the present disclosure is not an SPS that is determined not to need to receive or need HARQ-ACK feedback according to a specific rule, but is an SPS PDSCH that is determined to be received and needs to perform HARQ-ACK feedback according to a specific rule. For example, if multiple SPS PDSCHs are configured in one slot and the multiple SPS PDSCHs overlap on time domain resources, the SPS to be received is the SPS PDSCH with the smallest SPS configuration index among the overlapping SPS PDSCHs determined according to the overlap rule, rather than all the SPS PDSCHs being counted in; for another example, if maximum N1 unicast PDSCHs are supported for reception in one slot, and N2 is greater than N1 SPS PDSCHs in the current slot, no greater than N1 SPS PDSCHs are selected from N2 SPS PDSCHs in the order from small to large of SPS configuration indexes as SPS PDSCHs to be received; for another example, a slot includes N2 SPS PDSCHs, and a symbol set in which N3 SPS PDSCHs are located includes uplink symbols configured by a higher layer (i.e., there is collision with the uplink symbols), then the SPS PDSCHs that collide with the uplink symbols are not SPS PDSCHs that need to be received, i.e., the SPS PDSCHs after the N3 colliding SPS PDSCHs are removed from the N2 SPS PDSCHs are SPS PDSCHs that need to be received. Of course, the above description of the SPS PDSCH to be received is an example, and the SPS PDSCH that is transmitted in this slot may be configured without the above limitation.

The HARQ-ACK feedback sequence, i.e. the HARQ-ACK codebook mentioned above, may be determined according to the manner described above, and will not be described herein.

It should be noted that, in step S210, in the embodiment of the present disclosure, the method further includes: mapping the HARQ-ACK feedback of the PDCCH indicating the SPS resource release to the feedback position determined according to the reference time domain resource in the HARQ-ACK feedback sequence when a first condition being at least one of the following conditions is met:
a sum of a quantity B1 of the SPS PDSCH to be received and a quantity B2 of the PDCCH indicating the SPS resource release does not exceed a first value; where the first value is a maximum quantity of unicast PDSCHs capable of being received in one slot;
a sum of a quantity B1 of the SPS PDSCH to be received and a quantity B2 of the PDCCH indicating the SPS resource release does not exceed a second value; where the second value is a quantity of downlink transmission opportunities in the slot;
where B1 and B2 are both positive integers greater than or equal to 1.

Based on the above embodiment, when it is determined that at least one of the first conditions is satisfied, mapping HARQ-ACK feedback of a PDCCH indicating SPS resource release to a feedback position in a HARQ-ACK feedback sequence determined according to a reference time domain resource; otherwise, HARQ-ACK is not fed back to the PDCCH indicating the SPS resource release; alternatively, the scheduling is considered as erroneous scheduling, i.e. the terminal does not expect to receive B2 PDCCHs indicating a SPS resource release in a slot containing B1 SPS PDSCH transmissions that need to be received, and the sum of B1 and B2 exceeds said first value, and/or the terminal does not expect to receive B2 PDCCHs indicating a SPS resource release in a slot containing B1 SPS PDSCH transmissions that need to be received, and the sum of B1 and B2 exceeds said second value. Of course, the above determination may not be performed, and when there is an SPS PDSCH and a PDCCH indicating SPS resource release in one slot, HARQ-ACK feedback of the PDCCH indicating SPS resource release is always mapped to a feedback position determined according to the reference time domain resource in the HARQ-ACK feedback sequence.

It should be noted that the sizes of the second values corresponding to different slots may be the same or different; this is because, although different slots correspond to the same TDRA table to determine the number of downlink transmission opportunities, different slots may have different slot structures, and the available sets of SLIVs in the TDRA tables obtained in different slot structures may be different.

Further, it should be noted that, in the embodiment of the present disclosure, the mentioned downlink transmission opportunity is a candidate PDSCH transmission opportunity. The number of downlink transmission opportunities represents the maximum quantity (i.e., the second number) of PDSCHs that can be TDM-transmitted in a slot, and is limited by a predetermined TDRA table, which may include multiple rows, each row may provide one time domain resource information (SLIV, including at least a start symbol and transmission length information), one SLIV may determine a PDSCH transmission location, but since the TDRA table is used to support a base station to flexibly select which symbols in a slot and transmit one PDSCH in how many symbol lengths, there may be an overlap between the SLIVs given by each row in the TDRA table, for example, the SLIV given by the first row indicates that the start symbol is symbol 1, the transmission symbol length is 7 symbols, the SLIV given by the second row indicates that the start symbol is symbol 2, the transmission length is 7 symbols, the SLIV given by the third row indicates that the start symbol is symbol 3, the transmission length is 5 symbols, etc., and obviously, because the 3 SLIVs are mutually overlapped, the base station only selects one of the 3 SLIVs to transmit the PDSCH during actual scheduling, and when one of the SLIVs is selected to transmit the PDSCH, the other overlapped SLIVs are not used to transmit the PDSCH.

Of course, the TDRA table may also contain SLIVs that do not overlap with each other, and therefore, based on the TDRA table, according to the relationship between the SLIVs, may be divided into a plurality of SLIV groups according to a predetermined rule, there may be one SLIV in each group used for PDSCH transmission, the number of SLIV groups thus determines the number of candidate PDSCH transmission opportunities in a slot, and prior to the above described SLIV group partitioning, for each SLIV, an unusable SLIV in the TDRA table may be removed according to a semi-statically configured slot structure (if existing) in the current slot, where the unusable SLIV is an uplink symbol in which at least one symbol is semi-statically configured in a symbol set indicated by the SLIV, since downlink transmissions cannot be transmitted in the uplink symbols, this SLIV is not actually used to schedule PDSCH transmissions, if an SPS PDSCH transmission is allocated, this SPS PDSCH will not be transmitted either; because the semi-static slot structure of each slot may be different, the above-mentioned actions of removing unavailable SLIVs are performed separately for each slot, and SLIVs removed for different slots may be different, so that the number of downlink transmission opportunities that can be supported in different slots may also be different.

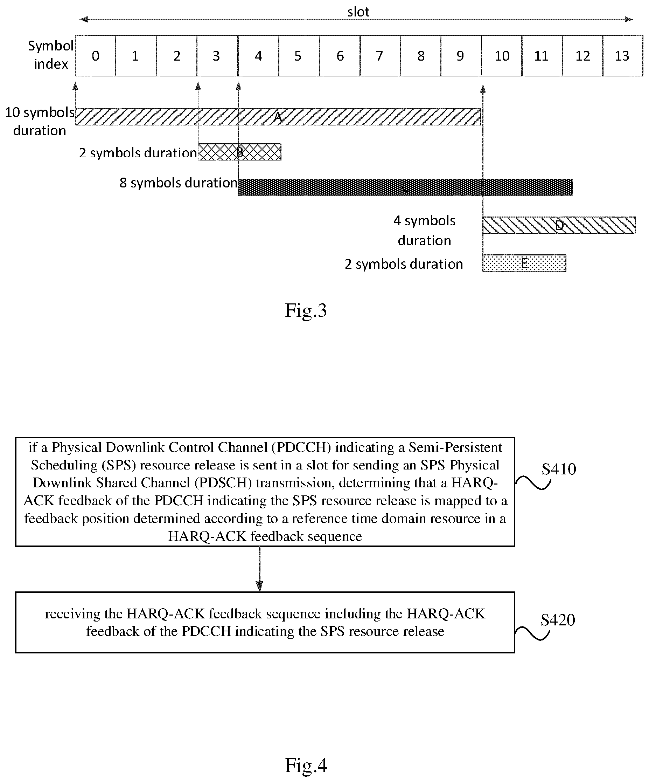

Specifically, if the terminal supports reception of greater than one unicast PDSCH in one slot, SLIV grouping may be performed according to a predetermined rule based on the SLIV set in the TDRA table, finding the SLIV with the earliest first end position, based on this SLIV, finding all the SLIVs whose starting positions are before the ending position of this SLIV, treating these SLIVs as a group, corresponding to a possible downlink transmission opportunity, and then removing these SLIVs from the set of SLIVs, repeating the above steps for the remaining SLIVs until all the SLIVs contained in the TDRA table are processed to obtain multiple downlink transmission opportunities, as shown in Fig. 3, resulting in a group of elements alB/C, corresponding to one downlink transmission opportunity, the element D/E is a group, corresponding to one downlink transmission opportunity, a total of 2 downlink transmission opportunities are obtained, that is, there may be 2 PDSCH transmissions in the slot that are not overlapped.

Certainly, actual transmission may be two PDSCHs, or may be only one PDSCH, specifically depending on the SLIV assigned to the PDSCH, for example, if one PDSCH is assigned to use SLIV-C, then since this SLIV overlaps with all other SLIVs, all other SLIVs are unavailable, at this time, there is only one PDSCH, for example, if one PDSCH is assigned to use SLIV-B, and another PDSCH is assigned to use SLIV-D, then these two SLIVs do not overlap, and both PDSCHs may transmit; because the semi-static HARQ-ACK needs to ensure that the stability of the feedback bit does not change along with the scheduling condition, when the semi-static HARQ-ACK is transmitted, the HARQ-ACK feedback position is reserved for each slot according to the number of the maximum downlink transmission opportunities, a plurality of PDSCHs actually exist, the HARQ-ACK of the PDSCHs are mapped to the corresponding positions according to the corresponding SLIVs, and NACK is generated as occupation if the HARQ-ACK position received by the corresponding PDSCH does not exist.

In the example of Fig. 3, for this slot, it is equivalent to that two HARQ-ACK feedback positions are reserved in the semi-static HARQ-ACK feedback sequence, if there is actually only a PDSCH using one SLIV in a-E in this slot, it may be known, according to whether the SLIV used by this PDSCH belongs to the first set or the second set of SLIV, which position of 2 HARQ-ACK positions corresponding to this slot the HARQ-ACK of this PDSCH is mapped to, for example, this PDSCH uses one SLIV in a \ B \ C, which is mapped to the first HARQ-ACK position, if one SLIV in D \ E is used, which is mapped to the second HARQ-ACK position; the number of HARQ-ACK bits at each HARQ-ACK position is not necessarily 1 bit, and depends on the PDSCH transmission configuration on the current carrier, for example, 2 TB transmission modes are configured and HARQ-ACK spatial combining is not configured (spatial combining, that is, logical and is performed between HARQ-ACKs of two TBs to obtain 1-bit HARQ-ACK operation), one HARQ-ACK position is 2-bit feedback and corresponds to each Transport Block (TB, Transport Block), if 1 TB transmission mode is configured or 2 TB transmission modes are configured and HARQ-ACK spatial combining is configured, one HARQ-ACK position is 1-bit feedback, and for example, if CBG-based transmission and feedback are configured, the number of HARQ-ACK feedback bits needs to be determined by combining the number of Code Block groups (CBG, Code Block groups) into which one TB is divided, each CBG for each TB corresponds to 1-bit feedback.

According to the method for determining the HARQ-ACK feedback position in the feedback sequence based on the SLIV group and the number of downlink transmission opportunities obtained by the semi-static codebook based on the SLIV group, when a PDCCH which indicates SPS resource release exists in a slot, the PDCCH also needs to perform HARQ-ACK feedback, if the position of the HARQ-ACK of the PDCCH in the HARQ-ACK feedback sequence needs to be obtained, a reference SLIV is needed, the SLIV which is selected as the reference comes from the TDRA table, the HARQ-ACK position in the HARQ-ACK feedback sequence is determined based on all available SLIVs in the TDRA table, obviously, the reference SLIV corresponding to the PDCCH also includes the reference SLIV corresponding to the PDCCH, and therefore the PDCCH can find the corresponding feedback position in the HARQ-ACK feedback sequence according to the reference SLIV.

However, when there are different reference SLIV definitions, there may be the following cases, for example, if the reference SLIV is indicated by the PDCCH itself, the base station may ensure that a SLIV that does not collide with the used SLIV in the current slot is selected when selecting the SLIV, so that the HARQ-ACK feedback position of the PDCCH is determined according to the SLIV and does not collide with HARQ-ACKs of other existing transmissions (e.g., SPS PDSCH in the slot); of course, if the SPS PDSCH in the slot already reaches the number of downlink transmission opportunities of the slot, it means that determining the HARQ-ACK feedback position of the PDCCH by referring to any SLIV will conflict with the HARQ-ACK feedback position of an existing SPS PDSCH, because the reference SLIV definitely belongs to a certain SLIV group, and one SLIV already exists in each SLIV group and is used, and then any one SLIV in the group is used to obtain the same HARQ-ACK feedback position, so that there is a conflict of feedback positions, at this time, if the HARQ-ACK of the PDCCH is to be fed back, under the condition that the HARQ-ACK feedback position reserved for the slot in the HARQ-ACK feedback sequence is not increased, only the HARQ-ACK feedback position corresponding to a certain SPS PDSCH in the HARQ-ACK feedback position can be replaced for HARQ-ACK transmission for the PDCCH, the HARQ-ACK for this replaced SPS PDSCH cannot be transmitted. If the alternative situation is to be avoided, the base station is required to limit, on scheduling, the PDCCH indicating the SPS resource release in the slot already containing the SPS PDSCH transmission with the number of downlink transmission opportunities not to be transmitted, because if the PDCCH is transmitted, the HARQ-ACK feedback position is insufficient, so that the PDCCH needs to occupy the HARQ-ACK feedback positions of other SPS PDSCHs for feedback.

For another example, if the reference SLIV of a PDCCH is the SLIV of an SPS PDSCH released by the PDCCH, then depending on whether this referenced SPS PDSCH is also transmitted in the slot of this PDCCH transmission:
1) If not, such a collision may exist when borrowing SLIVs of SPS PDSCH transmitted in other slots in a slot of a PDCCH transmission, because even though the SPS PDSCH in the slot in which the PDCCH is transmitted corresponds to a different SPS configuration than the SPS PDSCH released by the PDCCH, because the two are transmitted in different slots, there is no interaction between HARQ-ACK feedback even if the SLIVs are completely the same or overlap, because HARQ-ACK feedback positions are reserved separately for each slot, so that there may be a collision with HARQ-ACK feedback positions of other SPS PDSCHs in the slot when determining the HARQ-ACK feedback position of the PDCCH using the reference SLIVs, and resolving the collision may also employ one of the above manners, such as transmitting HARQ-ACK of the PDCCH while occupying HARQ-ACK feedback positions of SPS PDSCH that collided with the reference SLIVs of the PDCCH, the HARQ-ACK of the SPS PDSCH colliding with the reference SLIV cannot be transmitted, or the base station avoids scheduling, that is, selects a slot without collision to transmit the PDCCH, that is, the terminal side does not expect to transmit the PDCCH in the slot containing the SPS PDSCH colliding with the reference SLIV of the PDCCH; if the reference SLIV does not conflict with the SLIV of the SPS PDSCH in the current slot, determining a HARQ-ACK feedback position according to the reference SLIV, and feeding back the HARQ-ACK of the PDCCH on the basis of not influencing the HARQ-ACK feedback of the SPS PDSCH in the current slot;
2) if yes, when the HARQ-ACK feedback position is determined by the SLIV to transmit the HARQ-ACK of the PDCCH, the HARQ-ACK feedback of other SPS PDSCH (possibly including the SPS PDSCH which is not indicated to be released by the PDCCH, i.e., the SPS PDCCH in the SPS PDSCHs indicated to be released by the PDCCH, other than the above referred PDCCH) in the slot is not influenced when the HARQ-ACK of the PDCCH is transmitted by using the HARQ-ACK feedback position, and the HARQ-ACK feedback position corresponding to the SLIV occupying the released SPS PDSCH is also reasonable because the SPS PDSCH is released and the HARQ-ACK feedback position of the SPS PDSCH can be free to be used for HARQ-ACK transmission of the PDCCH.

Optionally, the method further includes: mapping the HARQ-ACK feedback of the PDCCH indicating the SPS resource release to the feedback position determined according to the reference time domain resource in the HARQ-ACK feedback sequence when a second condition being at least one of the following conditions is met:
a first second condition is one of the following conditions:
   the SPS PDSCH indicated to be released by the PDCCH indicating the SPS resource release does not include any one of the SPS PDSCH to be received;
   the SPS PDSCH to be received does not include a target SPS PDSCH; the target SPS PDSCH is the SPS PDSCH with a minimum or maximum SPS configuration index in the SPS PDSCH indicated to be released by the PDCCH indicating the SPS resource release;
   the SPS PDSCH to be received includes a part of the SPS PDSCHs indicated to be released by the PDCCH indicating the SPS resource release;
   a second second condition is:
      the SPS PDSCH to be received and the PDCCH indicating the SPS resource release have the same priority;
      a third second condition is:
         the PDCCH indicating the SPS resource release and the SPS PDSCH to be received perform a HARQ-ACK transmission in the same slot or sub-slot;
         a fourth second condition is:
            the SPS PDSCH to be received and the PDCCH indicating the SPS resource release are transmitted on the same carrier;
            a fifth second condition is:
               a maximum quantity of unicast PDSCH capable of being received by the terminal in one slot is greater than 1 or equal to 1;
               a sixth second condition is:
                  the terminal configures a semi-static hybrid automatic repeat request acknowledgement information transmission mode.

According to the HARQ-ACK feedback method, when at least one second condition is met, HARQ-ACK feedback of a PDCCH indicating SPS resource release is mapped to a feedback position determined according to a reference time domain resource in a HARQ-ACK feedback sequence; otherwise, HARQ-ACK for PDCCH indicating SPS resource release may not be transmitted in the manner presented in this disclosure, and certainly not excluded that HARQ-ACK for PDCCH indicating SPS resource release may be transmitted in the same manner as presented in this disclosure.

Optionally, in the first second condition:
when the number of the received PDCCHs indicating the SPS resource release is B2, the B1 SPS PDSCHs are not included in the B2 SPS PDSCHs indicated by the PDCCH indicating the SPS resource release, or the B2 SPS PDSCHs indicated by the PDCCH indicating the SPS resource release are not included in the B1 SPS PDSCHs;
the target SPS PDSCH is the SPS PDSCH with the minimum or maximum SPS configuration index in the SPS PDSCH indicated to be released by the PDCCH indicating the SPS resource release, namely B1 SPS PDSCHs are required to be received by the slot, and when the number of the received PDCCH indicating the SPS resource release is B2, the B1 SPS PDSCHs do not contain the SPS PDSCH with the minimum or maximum index in the SPS PDSCH indicated to be released by each PDCCH in the B2 PDCCHs for indicating the SPS resource release.

In one embodiment, if there are multiple PDCCHs indicating SPS resource release, the SPS PDSCH with the minimum index or the maximum index is the SPS PDSCH with the minimum SPS configuration index in the SPS PDCHs indicated to be released by each PDCCH.

The SPS PDSCHs to be received include the partial SPS PDSCHs indicated by the PDCCH indicating the SPS resource release, that is, B1 SPS PDSCHs need to be received for a slot, and when the received PDCCH indicating the SPS resource release is B2, the B1 SPS PDSCHs include the partial SPS PDSCHs indicated by each PDCCH of the B2 PDCCHs indicating the SPS resource release, for example, include at least one SPS PDSCH not indicating the lowest index among the SPS PDSCHs indicating the release.

It should be noted that, in an embodiment, in the absence of the limitation of the first and second conditions described above, it is considered that, for any case, as long as a PDCCH indicating SPS resource release is received in a slot including SPS PDSCH transmission, HARQ-ACK feedback of the PDCCH indicating SPS resource release is always mapped to a feedback position in a HARQ-ACK feedback sequence determined according to a reference time domain resource, so as to transmit HARQ-ACK feedback of the PDCCH indicating SPS resource release.

In a second condition, when the PDCCH indicating SPS resource release needs to be received and the PDCCH indicating SPS resource release has the same priority, that is, B1 SPS PDSCHs need to be received in a slot, and the received PDCCH indicating SPS resource release has B2, B2 PDCCHs indicating SPS resource release have the same priority as the B1 SPS PDSCHs (that is, the HARQ-ACK codebook corresponding to the PDCCH indicating SPS resource release has the same priority as the HARQ-ACK codebook corresponding to the SPS PDSCH, where the HARQ-ACK codebook corresponding to the PDCCH indicating SPS resource release has the same priority as the HARQ-ACK codebook corresponding to the SPS PDSCH released by the PDCCH indicating SPS resource release). Based on the second condition, when the B2 PDCCHs indicating SPS resource release have the same priority as the B1 SPS PDSCH, mapping HARQ-ACK feedback of the PDCCHs indicating SPS resource release to a feedback position determined according to the reference time domain resource in a HARQ-ACK feedback sequence.

In a third second condition, the PDCCH indicating SPS resource release and the SPS PDSCH to be received perform HARQ-ACK transmission in the same slot or sub-slot, that is, when B1 SPS PDSCHs need to be received for a slot, and when the received PDCCH indicating SPS resource release is B2, B2 PDCCHs indicating SPS resource release and the B1 SPS PDSCHs perform HARQ-ACK transmission in the same slot or sub-slot; that is, when the B2 PDCCHs indicating SPS resource release and the B1 SPS PDSCH perform HARQ-ACK transmission in the same slot or sub-slot (i.e., HARQ-ACK transmission is performed on the same PUCCH, that is, the PDCCH and the SPS PDSCH correspond to the same K1 value), HARQ-ACK feedback of the PDCCHs indicating SPS resource release is mapped to a feedback position determined according to the reference time domain resource in a HARQ-ACK feedback sequence.

Further, the method further includes:
determining the reference time domain resource as one of:
a time domain resource indicated by the PDCCH indicating the SPS resource release;
a time domain resource corresponding to the SPS PDSCH indicated to be released by the PDCCH indicating the SPS resource release.

Optionally, when the reference time domain resource is the time domain resource corresponding to the SPS PDSCH indicated to be released by the PDCCH indicating SPS resource release,
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs.

In the embodiment of the present disclosure, the method further includes:
the reference time domain resource is not overlapped with the time domain resource of the SPS PDSCH to be received, or does not correspond to the index of the same downlink transmission opportunity (that is, after SLIV grouping is performed on the SLIVs in the TDRA table according to the predetermined rule, one downlink transmission opportunity or one downlink transmission opportunity corresponding to each group of SLIVs is obtained, so as to obtain a set of multiple downlink transmission opportunities corresponding to one slot, each downlink transmission opportunity in the set has its own index, which indicates the number one downlink transmission opportunity in the slot, and the index of the downlink transmission opportunity is the index position in the HARQ-ACK position reserved for the downlink transmission opportunity set in the slot in the HARQ-ACK feedback sequence corresponding to the index of the downlink transmission opportunity); or
when the reference time domain resource is overlapped with the time domain resource of at least one SPS PDSCH in the SPS PDSCH to be received or corresponds to the same index of downlink transmission opportunity, not performing a HARQ-ACK feedback for the SPS PDSCH which is overlapped with the reference time domain resource or corresponds to the same index of downlink transmission opportunity in the SPS PDSCH to be received.

Optionally, the not performing the HARQ-ACK feedback for the SPS PDSCH which is overlapped with the reference time domain resource or corresponds to the same index of downlink transmission opportunity in the SPS PDSCH to be received when the reference time domain resource is overlapped with the time domain resource of at least one SPS PDSCH in the SPS PDSCH to be received or corresponds to the same index of downlink transmission opportunity further includes:
transmitting the PDCCH indicating the SPS resource release, no later than a position of a starting symbol or an ending symbol of the SPS PDSCH which is overlapped with the reference time domain resource or corresponds to the same index of downlink transmission opportunity in the SPS PDSCH to be received in the slot.

It should be noted that the terminal does not expect the reference time domain resource to overlap with the time domain resource of the SPS PDSCH to be received or correspond to the index of the same downlink transmission opportunity (i.e., the candidate PDSCH transmission opportunity), where the corresponding to the same index means that HARQ-ACK mapping is performed corresponding to the same HARQ-ACK feedback position in the HARQ-ACK feedback sequence.

Specifically, when the reference time domain resources do not overlap with the time domain resources of the B1 SPS PDSCHs or do not correspond to the index of the same candidate PDSCH transmission opportunity, or when the reference time domain resources overlap with the time domain resources of at least one SPS PDSCH of the B1 SPS PDSCHs or correspond to the index of the same candidate PDSCH transmission opportunity, HARQ-ACK is not generated for the SPS PDSCH that overlaps with the reference time domain resources or corresponds to the index of the same candidate PDSCH transmission opportunity.

The above embodiment may be interpreted as that a collision between the reference time domain resource and the time domain resource of the SPS PDSCH may be allowed (i.e. there is an overlap or an index corresponding to the same candidate PDSCH transmission opportunity), and at this time, the HARQ-ACK feedback position of the SPS PDSCH colliding with the reference time domain resource needs to be occupied to transmit the HARQ-ACK of the PDCCH indicating the SPS resource release.

Specifically, for a terminal with a single unicast PDSCH receiving capability in a slot, at most one SPS PDSCH to be received exists in the slot, if a reference time domain resource conflicts with the time domain resource of the SPS PDSCH, HARQ-ACK is fed back only to a PDCCH indicating SPS resource release, namely the HARQ-ACK of the SPS PDSCH is not fed back, and the position of the HARQ-ACK is given back to the PDCCH indicating SPS resource release;
for a terminal with single-uniform PDSCH receiving capability in one slot, multiple SPS PDSCHs (or one SPS PDSCH) to be received may exist in the slot, if the reference time domain resource collides with the time domain resource of at least one of the multiple SPS PDSCHs, HARQ-ACK feedback is carried out on the SPS PDSCH with the collision of the reference time domain resource while HARQ-ACK feedback is carried out on the SPS PDSCH with the collision of the reference time domain resource (because the position of the SPS PDSCH is assigned to the PDCCH with the collision of the SPS resource releasing for HARQ-ACK feedback), but HARQ-ACK feedback can be carried out normally on other SPS PDSCHs with no collision of the reference time domain resource in the multiple SPS PDSCHs.

Further, in the embodiment of the present disclosure, in step S210, the SPS PDSCH to be received satisfies at least one of the following conditions:
the SPS PDSCH is an SPS PDSCH which needs HARQ-ACK;
the SPS PDSCH is determined not to be collided with an uplink symbol according to a slot structure configured by a high-layer signaling.

Further, the reference time domain resource does not collide with the uplink symbol in the slot; the uplink symbols are determined according to a slot structure configured by a high-layer signaling, if no high-layer signaling is configured, each symbol is considered to be a flexible symbol, and an uplink or downlink transmission direction exists only when DCI scheduling or SFI indication exists.

In one embodiment, the SPS PDSCH to be received is an SPS PDSCH that needs to be subjected to HARQ-ACK feedback, that is, if there is a collision between SPS PDSCHs (for example, in case 1: in the same slot of the same carrier, time domain resources of a plurality of SPS PDSCHs are overlapped with each other; for example, in case 2: when the terminal can receive a maximum quantity of unicast PDSCHs in a slot, if the number of SPS PDSCHs configured to be transmitted in the slot exceeds a, SPS PDSCH selection needs to be performed according to a predetermined rule; for example, in case 3: the above cases 1 and 2 exist at the same time; for example, in case 4: there is an uplink symbol in a symbol set included in one SPS PDSCH and this SPS PDSCH cannot be actually transmitted), after the collision is solved, it is determined that the SPS PDSCH to be received by the terminal and feed back HARQ-ACK (for example, in case 1, according to a selection rule among the overlapped SPS PDSCHs, selecting the SPS PDSCH with the minimum SPS configuration index in the overlapping for receiving and feeding back HARQ-ACK, if a plurality of SPS PDSCHs are overlapped with each other, removing other SPS PDSCHs overlapped with the SPS PDSCH with the minimum index at present according to a preset rule and from small to large according to the SPS configuration index, finding the SPS PDSCH with the next minimum index, repeating the operation, and accordingly determining a plurality of different SPS PDSCHs one by one for receiving and feeding back HARQ-ACK without receiving other SPS PDSCHs and feeding back HARQ-ACK; for another example, in case 2, according to a predetermined rule, no greater than a SPS PDSCHs may be selected to be received and its HARQ-ACK may be fed back in order from small to large SPS configuration indexes, and no other SPS PDSCHs are received and its HARQ-ACK is not required to be fed back; for another example, in case 3, the overlapped SPS is processed according to the rule in case 1 to obtain multiple non-overlapped SPS PDSCHs to be received, and then, among the SPS PDSCHs, the SPS PDSCHs that can be received are selected and HARQ-ACK is fed back according to the limitation of a in the manner in case 2, and no HARQ-ACK is required to be received nor fed back for other SPS PDSCHs; as another example, in case 4, it is determined that such SPS PDSCH does not need to be received nor HARQ-ACK feedback), in other words, the B1 SPS PDSCHs are B1 SPS PDSCHs that do not overlap each other in time domain).

According to the HARQ-ACK feedback method in the embodiment of the present disclosure, for a terminal which adopts semi-static HARQ-ACK codebook transmission and supports receiving A (A is greater than 1) unicast PDSCHs at most in one slot, the HARQ-ACK feedback of the PDCCH indicating the SPS resource release is mapped to a feedback position determined according to a reference time domain resource in a HARQ-ACK feedback sequence, thereby solving the technical in the related art that the HARQ-ACK feedback mode of the PDCCH indicating SPS resource release is ambiguous when multiple SPS configurations are supported.

The embodiment of the present disclosure further provides a HARQ-ACK feedback method for HARQ-ACK, which is applied to a base station, and as shown in Fig. 4, the method includes:
S410: if a Physical Downlink Control Channel (PDCCH) indicating a Semi-Persistent Scheduling (SPS) resource release is sent in a slot for sending an SPS Physical Downlink Shared Channel (PDSCH) transmission, determining that a HARQ-ACK feedback of the PDCCH indicating the SPS resource release is mapped to a feedback position determined according to a reference time domain resource in a HARQ-ACK feedback sequence;
S420: receiving the HARQ-ACK feedback sequence including the HARQ-ACK feedback of the PDCCH indicating the SPS resource release.

Optionally, the method further includes: determining that the HARQ-ACK feedback of the PDCCH indicating the SPS resource release is mapped to the feedback position determined according to the reference time domain resource in the HARQ-ACK feedback sequence when a first condition being at least one of the following conditions is met:
a sum of a quantity B1 of the SPS PDSCH to be sent and a quantity B2 of the PDCCH indicating the SPS resource release does not exceed a first value; where the first value is a maximum quantity of unicast PDSCHs capable of being received in one slot;
a sum of a quantity B1 of the SPS PDSCH to be sent and a quantity B2 of the PDCCH indicating the SPS resource release does not exceed a second value; where the second value is a quantity of downlink transmission opportunities in the slot;
where B1 and B2 are both positive integers greater than or equal to 1.

Optionally, the HARQ-ACK feedback method further includes: determining that the HARQ-ACK feedback of the PDCCH indicating the SPS resource release is mapped to the feedback position determined according to the reference time domain resource in the HARQ-ACK feedback sequence when a second condition being at least one of the following conditions is met:
a first second condition is one of the following conditions:
the SPS PDSCH indicated to be released by the PDCCH indicating the SPS resource release does not include any one of the SPS PDSCH to be sent;
the SPS PDSCH to be sent does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be sent includes a part of the SPS PDSCHs indicated to be released by the PDCCH indicating the SPS resource release;
a second second condition is:
   the SPS PDSCH to be sent and the PDCCH indicating the SPS resource release have the same priority;
   a third second condition is:
      the PDCCH indicating the SPS resource release and the SPS PDSCH to be sent perform a HARQ-ACK transmission in the same slot or sub-slot;
      a fourth second condition is:
         the SPS PDSCH to be sent and the PDCCH indicating the SPS resource release are transmitted on the same carrier;
         a fifth second condition is:
            a maximum quantity of unicast PDSCH capable of being received by the terminal in one slot is greater than 1 or equal to 1;
            a sixth second condition is:
               the terminal configures a semi-static hybrid automatic repeat request acknowledgement information transmission mode.

Optionally, the HARQ-ACK feedback method further includes:
determining the reference time domain resource as one of:
a time domain resource indicated by the PDCCH indicating the SPS resource release;
a time domain resource corresponding to the SPS PDSCH indicated to be released by the PDCCH indicating the SPS resource release.

Optionally, when the reference time domain resource is a time domain resource corresponding to the SPS PDSCH indicated to be released by the PDCCH indicating the SPS resource release, the method further includes:
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs.

Optionally, the reference time domain resource is not overlapped with the time domain resource of the SPS PDSCH to be received, or the reference time domain resource and the SPS PDSCH to be received do not correspond to the same index of downlink transmission opportunity; or,
when the reference time domain resource is overlapped with the time domain resource of at least one SPS PDSCH in the SPS PDSCH to be received or corresponds to the same index of downlink transmission opportunity, not performing a HARQ-ACK feedback for the SPS PDSCH which is overlapped with the reference time domain resource or corresponds to the same index of downlink transmission opportunity in the SPS PDSCH to be received.

Optionally, the not performing the HARQ-ACK feedback for the SPS PDSCH which is overlapped with the reference time domain resource or corresponds to the same index of downlink transmission opportunity in the SPS PDSCH to be received when the reference time domain resource is overlapped with the time domain resource of at least one SPS PDSCH in the SPS PDSCH to be received or corresponds to the same index of downlink transmission opportunity further includes:
transmitting the PDCCH indicating the SPS resource release, no later than a position of a starting symbol or an ending symbol of the SPS PDSCH which is overlapped with the reference time domain resource or corresponds to the same index of downlink transmission opportunity in the SPS PDSCH to be received in the slot.

Optionally, the reference time domain resource does not collide with an uplink symbol in the slot.

Optionally, the SPS PDSCH to be received satisfies at least one of the following conditions:
the SPS PDSCH is an SPS PDSCH which needs HARQ-ACK;
the SPS PDSCH is determined not to be collided with an uplink symbol according to a slot structure configured by a high-layer signaling.

When the HARQ-ACK feedback method according to the embodiment of the present disclosure is applied to a base station, the detailed description above may be referred to with reference to Fig. 2 and Fig. 3, and details are not repeated here.

The following explains a specific process of the HARQ-ACK feedback method according to the embodiment of the present disclosure with reference to a specific implementation manner.

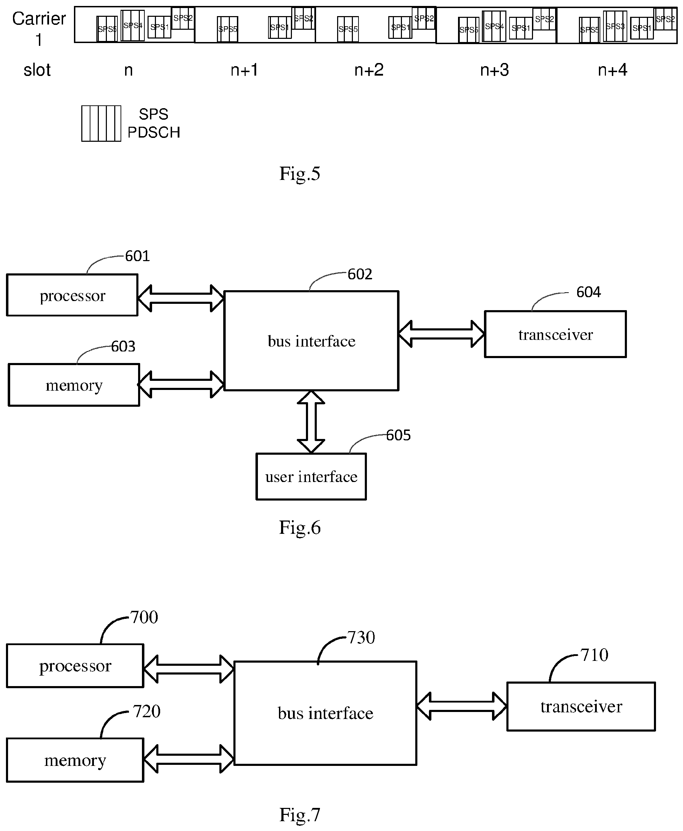

Assuming that the terminal is configured with 5 SPS configurations, as shown in Fig. 5, a semi-static HARQ-ACK codebook is adopted, where for simplicity it is assumed that the set of K1= {1, 2}, that the terminal's capability to receive unicast PDSCH in one slot is a maximum of a =4, i.e. feedback information corresponding to a maximum of 4 PDSCHs possible in one downlink slot of the HARQ-ACK codebook in one HARQ-ACK feedback slot, that the feedback information for each PDSCH is 1 bit, that the PDCCH indicating SPS resource release is assumed to have the same priority as the HARQ-ACK feedback for each SPS, that there are C =4 candidate PDSCH transmission opportunities in slots n, n+2, i.e. PDSCH transmissions in one slot for which a maximum of 4 TDM can be scheduled, i.e. the positions of 4 HARQ-ACKs reserved in the HARQ-ACK codebook for which a corresponding PDSCH needs to be fed back HARQ-ACK, are determined according to the TDRA table, assuming that the feedback information of each PDSCH is 1 bit, each slot is corresponding to 4-bit HARQ-ACK, it is determined from the TDRA table that there are C =3 candidate PDSCH transmission opportunities in slot n+ 1.

### Embodiment one based on the configuration parameters

Base station side: in the slot n, the first mode: since there are already 4 SPS transmissions, if the base station wants to transmit a PDCCH indicating a release of SPS3, if K1=1 configured for the PDCCH, it cannot transmit in slot n because there are already 4 PDSCH transmissions in slot n and only C =4 downlink transmission opportunities are supported, and it cannot support one more PDCCH transmission indicating a SPS resource release because HARQ-ACK is reserved for only 4 PDSCHs, and it cannot support more HARQ-ACK transmission of one PDCCH indicating a SPS resource release; alternatively, the second mode: the base station may send a PDCCH indicating release of SPS4, 5 in slot n, but indicate K1=2 to this PDCCH, i.e. let HARQ-ACK of this PDCCH and HARQ-ACK of SPS 1-4 in slot n not be transmitted in the same slot (the same PUCCH), then normal transmission may be performed, receiving HARQ-ACK of corresponding SPS 1, 2, 4, 5 in slot n+1 and HARQ-ACK of PDCCH indicating release of SPS3 resources in slot n+2, respectively; alternatively, the third mode: the base station transmits the PDCCH in the slot n and indicates K1=1, and the HARQ-ACK of the PDCCH occupies the feedback position of the HARQ-ACK of one SPS from SPS1, 2, 4 and 5 in the slot n for feedback, but the HARQ-ACK of the SPS cannot be fed back.

Terminal side: first, the PDCCH indicating the SPS release is not expected to be received in the slot n, because the total number of the PDCCHs indicating the SPS resource release and the SPS1, 2, 4, 5 in the slot n exceed a =4 and C = 4; alternatively, the second mode: the terminal receives the PDCCH in the slot n and determines that the HARQ-ACK of the PDCCH is fed back in the slot n+2, then the HARQ-ACK of the SPS 1, 2, 4 and 5 can be fed back in the slot n+1 and the HARQ-ACK of the PDCCH indicating the SPS3 resource release can be fed back in the slot n+2 respectively, where the HARQ-ACK position of the PDCCH can be determined according to the SLIV of the SPS3 in the SPS3 released by the HARQ-ACK position of the PDCCH; alternatively, the third mode: the terminal receives the PDCCH in the slot n, and determines that the HARQ-ACK of the PDCCH and the HARQ-ACK of the SPS1, 2, 4 and 5 are fed back in the slot n+1, the feedback position of the HARQ-ACK of the PDCCH in the HARQ-ACK codebook in the slot n+1 is determined according to the SLIV of the SPS3 indicated and released by the PDCCH, and the HARQ-ACK is mapped to the corresponding position, while the HARQ-ACK feedback is not carried out in the slot n+1 for the SPS (such as the SPS 5) which is overlapped with the SLIV corresponding to the PDCCH or corresponds to the same downlink transmission opportunity index in the SPS1, 2, 4 and 5, namely the position is assigned to the PDCCH indicating the SPS resource release.

### Second embodiment

Base station side: in a slot n+1, the first mode: since there are already 3 SPS transmissions, if the base station wants to transmit a PDCCH indicating release of SPS3 and/or 4, it cannot transmit in slot n+1 if K1=1 configured for the PDCCH, because there are already 3 PDSCH transmissions in slot n+1, although the total number of PDCCH transmissions indicating SPS resource release does not exceed a =4, but exceeds the number of downlink transmission opportunities C =3 that can be supported in slot n+1, i.e. only HARQ-ACK positions corresponding to 3 downlink transmission opportunities are reserved in the HARQ-ACK codebook for slot n+1, and if one more PDCCH indicating SPS resource release is added, there are no redundant feedback positions; alternatively, the second mode: the base station may send a PDCCH indicating release of SPS3, 4 in slot n+1, but indicate K1=2 to the PDCCH, that is, let HARQ-ACK of the PDCCH and HARQ-ACK of SPS1, 2, 5 in slot n+1 not be transmitted in the same slot (the same PUCCH), and may normally transmit, receive HARQ-ACK of corresponding SPS1, 2, 5 in slot n+2 and receive HARQ-ACK of PDCCH indicating release of SPS3, 4 resources in slot n+3, respectively; alternatively, the third mode: the base station transmits the PDCCH in the slot n+1 and indicates K1=1, and the HARQ-ACK of the PDCCH occupies the HARQ-ACK feedback position of one SPS1, 2, 5 in the slot n+1 for feedback, but the HARQ-ACK of the SPS cannot be fed back.

Terminal side, first mode: the PDCCH indicating the release of SPS3, 4 is not expected to be received in slot n+1 because the total number of PDCCHs indicating the SPS resource release in slot n and the total number of SPS1, 2, 5 in slot n exceed C = 3; alternatively, the second mode: the terminal receives the PDCCH in the slot n+1 and determines that the HARQ-ACK of the PDCCH is fed back in the slot n+3, then the HARQ-ACK of the SPS1, 2 and 5 can be fed back in the slot n+2 and the HARQ-ACK of the PDCCH indicating the SPS3 and 4 resource release can be fed back in the slot n+3 respectively, where the HARQ-ACK position of the PDCCH can be determined according to the SLIV of the SPS3 in the SPS3 and 4 released by the HARQ-ACK position of the PDCCH; alternatively, the third mode: the terminal receives the PDCCH in the slot n+1, and determines that the HARQ-ACK of the PDCCH and the HARQ-ACK of the SPS1, 2 and 5 are fed back in the slot n+2, then the feedback position of the HARQ-ACK of the PDCCH in the HARQ-ACK codebook in the slot n+2 is determined according to the SLIV of the SPS3 in the SPS3 and 4 which is indicated to be released by the PDCCH, the HARQ-ACK is mapped to the corresponding position, and the HARQ-ACK feedback is not carried out in the slot n+2 for the SPS (such as the SPS 5) which is overlapped with the SLIV corresponding to the PDCCH or corresponds to the same downlink transmission opportunity index in the SPS1, 2 and 5, namely the position is assigned to the PDCCH which indicates the SPS resource to be released.

### Third embodiment

The base station side may transmit a PDCCH jointly indicating SPS3 and SPS4 (specifically, PDSCH corresponding to SPS configuration 3 and configuration 4) resource release in slot n+2, and indicate K1=1 of this PDCCH, assuming that K1=1 corresponds to each SPS PDSCH, that is, 3 SPSs in slot n+2 and one PDCCH indicating SPS resource release are both HARQ-ACK fed back in slot n+3, and SPS released by PDCCH indicating SPS resource release is not included in 3 SPSs in slot n+ 2; at this time, since one slot maximally supports HARQ-ACK feedback of a =4 PDSCHs, and the slot n+2 supports maximal C =4 downlink transmission opportunities, and at this time, the SPS in the slot n+2 and the PDCCH indicating SPS resource release do not always exceed a and C, HARQ-ACK feedback may be performed on the PDCCH indicating SPS resource release, so the terminal maps HARQ-ACK of the PDCCH to HARQ-ACK positions in the HARQ-ACK codebook in the slot n+3 determined according to SPS3 indicating release and SPS3 slvs in 4 indicating release, and determines whether a sllv corresponding to the PDCCH (the sllv of SPS 3) overlaps with a sllv corresponding to any one of SPS1, 2, and 5 in the slot n+2 or corresponds to an index of the same downlink transmission opportunity, and if it is determined that the HARQ-ACK of SPS1, 2, and 5 is mapped to SPS-ACK in the slot n+3 according to 1, b 83, C, and C in the SPS codebook in the slot n+3, respectively, 2. 5, thereby transmitting SPS1, SPS2 and SPS5 in the slot n+2 and the HARQ-ACK of the PDCCH indicating the resource release of the SPS3 and SPS4 in the same HARQ-ACK codebook in the slot n+3, and if the judgment is yes, performing HARQ-ACK feedback on the SPS (assumed to be SPS 5) in which SLIVs corresponding to the PDCCH are overlapped or correspond to the same downlink transmission opportunity index in the SPS1, SPS2 and SPS5, where the HARQ-ACK feedback is not performed, namely HARQ-ACK of the PDCCH indicating the resource release mapped in the position corresponding to the SLIVs or the downlink transmission opportunity index in the HARQ-ACK codebook of the slot n+3 is not mapped, and HARQ-ACK of the SPS5 cannot be mapped; and the base station side receives the HARQ-ACK codebook in the slot n+3 in the same way, obtains the PDCCH indicating the SPS resource release and the HARQ-ACK of the SPS from the HARQ-ACK codebook, and determines whether the SPS resource release is successful and whether the SPS transmission is correct.

### Example IV

In the third embodiment, the base station may also instruct K1=2 of the PDCCH indicating SPS resource release, that is, perform HARQ-ACK feedback in slot n+4, and then, because the feedback is not performed in the same slot as SPS1, 2, 5 in slot n+2, it is not necessary to determine whether the total number exceeds a and/or C, the feedback may be performed in the corresponding slots, that is, the terminal feeds back HARQ-ACKs of SPS1, 2, 5 in slot n+1 in slot n+3 and HARQ-ACKs of PDCCH indicating SPS3, 4 resource release in slot n+1 in slot n+4, respectively, where the position of HARQ-ACK of PDCCH in the HARQ-ACK is determined according to the SLIV of SPS3, 3 in SPS4 released by the HARQ-ACK; SLIV conflict does not exist among different feedback slots; on the base station side, in the same manner as above, the HARQ-ACKs of the SPSs 1, 2 and 5 in the slot n+1 are received in the slot n+3, and the HARQ-ACKs of the PDCCHs indicating the release of the SPS3 and 4 resources in the slot n+1 are received in the slot n+4, respectively, and the PDCCH indicating the release of the SPS resources and the HARQ-ACKs of the SPS are obtained therefrom, and it is determined whether the release is successful and whether the SPS transmission is correct.

### Fifth embodiment

The base station may transmit one PDCCH jointly indicating SPS3 and SPS5 resource release in slot n+2 and indicating K1=1 of this PDCCH, assuming that K1=1 for each SPS PDSCH, that is, 3 SPSs in slot n+2 and one PDCCH indicating SPS resource release are both HARQ-ACK fed back in slot n+3, and one SPS (SPS 5, that is, the SPS not of the lowest index of the released SPSs) released by the PDCCH indicating SPS resource release is included in 3 SPSs in slot n+ 2; at this time, since one slot maximally supports HARQ-ACK feedback of a =4 PDSCHs, and the slot n+2 supports maximal C =4 downlink transmission opportunities, and at this time, the SPS in the slot n+2 and the PDCCH indicating SPS resource release do not always exceed A and C, HARQ-ACK feedback may be performed on the PDCCH indicating SPS resource release, so the terminal maps HARQ-ACK of the PDCCH to HARQ-ACK positions in the HARQ-ACK codebook in the slot n+3 determined according to SPS3 SLIVs in SPS3 and SPS5 indicated to be released, and determines whether a SLIV corresponding to the PDCCH (the SLIV of SPS 3) overlaps with a SLIV corresponding to any one of SPS1, 2, and 5 in the slot n+2 or corresponds to a same index of downlink transmission opportunity, and if it is determined that the HARQ-ACKs of SPS1, 2, and 5 are mapped to SPS-ACK in the slot n+3 according to 1, SPS 83, PDSCH and PDCCH in the HARQ-ACK codebook in the slot n+3, respectively, 2. 5, thereby transmitting SPS1, SPS2 and SPS5 in the slot n+2 and the HARQ-ACK of the PDCCH indicating the resource release of the SPS3 and SPS5 in the same HARQ-ACK codebook in the slot n+3, and if the judgment is yes, performing HARQ-ACK feedback on the SPS (assumed to be SPS 2) in which SLIVs corresponding to the PDCCH are overlapped or correspond to the same downlink transmission opportunity index in the SPS1, SPS2 and SPS5, where the HARQ-ACK feedback is not performed, namely HARQ-ACK of the PDCCH indicating the resource release mapped in the position corresponding to the SLIVs or the downlink transmission opportunity index in the HARQ-ACK codebook of the slot n+3 is not mapped, and HARQ-ACK of the SPS2 cannot be mapped; and the base station side receives the HARQ-ACK codebook in the slot n+3 in the same way, obtains the PDCCH indicating the SPS resource release and the HARQ-ACK of the SPS from the HARQ-ACK codebook, and determines whether the SPS resource release is successful and whether the SPS transmission is correct.

### Sixth embodiment

In the fifth embodiment, the base station may also indicate K1=2 of the PDCCH indicating SPS resource release, that is, perform HARQ-ACK feedback in slot n+4, and then, because the feedback is not performed in the same slot as SPS1, 2, 5 in slot n+2, it is not necessary to determine whether the total number exceeds A and/or C, the feedback may be performed in the corresponding slots, that is, the terminal feeds back HARQ-ACKs of SPS1, 2, 5 in slot n+1 in slot n+3, and HARQ-ACKs of PDCCH indicating SPS3, 5 resource release in slot n+1 in slot n+4, respectively, where the position of HARQ-ACK of PDCCH in the HARQ-ACK is determined according to the SLIV of SPS3, 3 in SPS3, 5 released by the HARQ-ACK; SLIV conflict does not exist among different feedback slots; on the base station side, in the same manner as above, the HARQ-ACKs of the SPSs 1, 2 and 5 in the slot n+1 are received in the slot n+3, and the HARQ-ACKs of the PDCCHs indicating the release of the SPS3 and 5 resources in the slot n+1 are received in the slot n+4, respectively, and the PDCCH indicating the release of the SPS resources and the HARQ-ACKs of the SPS are obtained therefrom, and it is determined whether the release is successful and whether the SPS transmission is correct.

It should be noted that, in the above embodiment, only the sum a of the quantity B1 of SPS PDSCHs that need to be received and the quantity B2 of PDCCHs indicating SPS resource release may be considered, only the maximum quantity C of unicast PDSCHs supported to be received in one slot may be considered, and both a and C may be considered, that is, the determination is performed according to the minimum value of a and C;
in the above embodiment, if the PDCCH indicating SPS resource release only releases one SPS, for example, only releases SPS3, the processing manner is the same as above and is not described again;
in the above embodiment, if it is assumed that the period of SPS1 and SPS2 is 4, the PDCCH indicating SPS resource release may also be transmitted in slot n+1 when slot n, n+4, n+8, etc. is transmitted, the period of SPS3 and SPS4 is 2ms when slot n, n+2, n+4, etc. is transmitted, and at this time, since the PDCCH indicating SPS resource release is not in the same slot as any SPS transmission, HARQ-ACK of the PDCCH indicating SPS resource release does not need to be fed back by occupying the HARQ-ACK position corresponding to which SPS is in the semi-static codebook, and therefore, feedback may be performed in a semi-static codebook manner in the related art, that is, if the HARQ-ACK of the SPS and the HARQ-ACK of the PDCCH indicating SPS resource release are transmitted in the same slot, there are HARQ-ACK positions of the PDCCH corresponding SPS and the PDCCH indicating SPS resource release in the HARQ-ACK, respectively, respectively mapping the HARQ-ACK to corresponding positions, if the HARQ-ACK of the SPS and the HARQ-ACK of the PDCCH indicating the SPS resource release are not transmitted in the same slot, respectively transmitting in HARQ-ACK codebooks on different PUCCHs in the same method 2, and the HARQ-ACK transmission between the SPS and the PDCCH indicating the SPS resource release does not conflict;
it should be noted that, in the above embodiment, only the slot-based HARQ-ACK feedback is taken as an example (that is, the unit of K1 is a slot), and the method is also applicable to the sub-slot-based HARQ-ACK feedback (that is, the unit of K1 is a sub-slot); when the K1 set in the above embodiment contains more values, the set of downlink transmission opportunities corresponding to HARQ-ACK codebook in only one uplink slot is extended from one slot to multiple slots, and the same applies if there is a PDCCH indicating SPS resource release in each slot containing SPS transmission.

One embodiment of the present disclosure further provides a terminal, as shown in Fig. 6, the terminal includes: a processor 601; and a memory 603 connected to the processor 601 through a bus interface 602, the memory 603 being used for storing programs and data used by the processor 601 when performing operations, and a transceiver 604 connected to the bus interface 602 for receiving and transmitting data under the control of the processor 601.

The processor 601 calls and executes the programs and data stored in the memory 603 to perform:
if a Physical Downlink Control Channel (PDCCH) indicating a Semi-Persistent Scheduling (SPS) resource release is received in a slot for receiving an SPS Physical Downlink Shared Channel (PDSCH) transmission, mapping a HARQ-ACK feedback of the PDCCH indicating the SPS resource release, to a feedback position determined according to a reference time domain resource in a HARQ-ACK feedback sequence;
transmitting the HARQ-ACK feedback sequence including the HARQ-ACK feedback of the PDCCH indicating the SPS resource release.

Optionally, the processor 601 is configured to read the program stored in the memory to perform mapping the HARQ-ACK feedback of the PDCCH indicating the SPS resource release to the feedback position determined according to the reference time domain resource in the HARQ-ACK feedback sequence when a first condition being at least one of the following conditions is met:
a sum of a quantity B1 of the SPS PDSCH to be received and a quantity B2 of the PDCCH indicating the SPS resource release does not exceed a first value; where the first value is a maximum quantity of unicast PDSCHs capable of being received in one slot;
a sum of a quantity B1 of the SPS PDSCH to be received and a quantity B2 of the PDCCH indicating the SPS resource release does not exceed a second value; where the second value is a quantity of downlink transmission opportunities in the slot;
where B1 and B2 are both positive integers greater than or equal to 1.

Optionally, the terminal does not expect to receive B2 PDCCHs indicating the SPS resource release in a slot containing B1 SPS PDSCH transmissions to be received, and the sum of B1 and B2 exceeds the first value, and/or the terminal does not expect to receive B2 PDCCHs indicating the SPS resource release in a slot containing B1 SPS PDSCH transmissions to be received, and the sum of B1 and B2 exceeds the second value.

Optionally, the processor 601 is configured to read the program stored in the memory to perform mapping the HARQ-ACK feedback of the PDCCH indicating the SPS resource release to the feedback position determined according to the reference time domain resource in the HARQ-ACK feedback sequence when a second condition being at least one of the following conditions is met:
a first second condition is one of the following conditions:
the SPS PDSCH indicated to be released by the PDCCH indicating the SPS resource release does not include any one of the SPS PDSCH to be received;
the SPS PDSCH to be received does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be received includes a part of the SPS PDSCHs indicated to be released by the PDCCH indicating the SPS resource release;
a second second condition is:
   the SPS PDSCH to be received and the PDCCH indicating the SPS resource release have the same priority;
   a third second condition is:
      the PDCCH indicating the SPS resource release and the SPS PDSCH to be received perform a HARQ-ACK transmission in the same slot or sub-slot;
      a fourth second condition is:
         the SPS PDSCH to be received and the PDCCH indicating the SPS resource release are transmitted on the same carrier;
         a fifth second condition is:
            a maximum quantity of unicast PDSCH capable of being received by the terminal in one slot is greater than 1 or equal to 1;
            a sixth second condition is:
               the terminal configures a semi-static hybrid automatic repeat request acknowledgement information transmission mode.

Optionally, the processor 601 is configured to read the program stored in the memory to perform:
determining the reference time domain resource as one of:
a time domain resource indicated by the PDCCH indicating the SPS resource release;
a time domain resource corresponding to the SPS PDSCH indicated to be released by the PDCCH indicating the SPS resource release.

Optionally, when the reference time domain resource is the time domain resource corresponding to the SPS PDSCH indicated to be released by the PDCCH indicating SPS resource release,
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs.

Optionally, the reference time domain resource is not overlapped with the time domain resource of the SPS PDSCH to be received, or the reference time domain resource and the SPS PDSCH to be received do not correspond to the same index of downlink transmission opportunity;
or,
when the reference time domain resource is overlapped with the time domain resource of at least one SPS PDSCH in the SPS PDSCH to be received or corresponds to the same index of downlink transmission opportunity, not performing a HARQ-ACK feedback for the SPS PDSCH which is overlapped with the reference time domain resource or corresponds to the same index of downlink transmission opportunity in the SPS PDSCH to be received.

Optionally, the not performing the HARQ-ACK feedback for the SPS PDSCH which is overlapped with the reference time domain resource or corresponds to the same index of downlink transmission opportunity in the SPS PDSCH to be received when the reference time domain resource is overlapped with the time domain resource of at least one SPS PDSCH in the SPS PDSCH to be received or corresponds to the same index of downlink transmission opportunity further includes:
transmitting the PDCCH indicating the SPS resource release, no later than a position of a starting symbol or an ending symbol of the SPS PDSCH which is overlapped with the reference time domain resource or corresponds to the same index of downlink transmission opportunity in the SPS PDSCH to be received in the slot

Optionally, the reference time domain resource does not collide with an uplink symbol in the slot.

Optionally, the SPS PDSCH to be received satisfies at least one of the following conditions:
the SPS PDSCH is an SPS PDSCH which needs HARQ-ACK;
the SPS PDSCH is determined not to be collided with an uplink symbol according to a slot structure configured by a high-layer signaling.

It is noted that in Fig. 6, the bus architecture may include any number of interconnected buses and bridges, with one or more processors represented by processor 601 and various circuits represented by memory 603 being linked together. The bus architecture may also link together various other circuits such as peripherals, voltage regulators, power management circuits, and the like, which are well known in the art, and therefore, will not be described any further herein. The bus interface provides an interface. The transceiver 604 may be a plurality of elements including a transmitter and a receiver that provide a means for communicating with various other apparatus over a transmission medium. For different terminals, the user interface 605 may also be an interface capable of interfacing with a desired device, including but not limited to a keypad, display, speaker, microphone, joystick, etc. The processor 601 is responsible for managing the bus architecture and general processing, and the memory 603 may store data used by the processor 601 in performing operations.

An embodiment of the present disclosure further provides a base station, as shown in Fig. 7, where the base station includes: a processor 700; a memory 720 connected to the processor 700 through a bus interface 730, and a transceiver 710 connected to the processor 700 through a bus interface; the memory 720 is used for storing programs and data used by the processor in performing operations; transmitting data information or pilot through the transceiver 710, and also receiving an uplink control channel through the transceiver 710; the processor 700 is used to read the program in the memory 720, and execute the following processes:
if a Physical Downlink Control Channel (PDCCH) indicating a Semi-Persistent Scheduling (SPS) resource release is sent in a slot for sending an SPS Physical Downlink Shared Channel (PDSCH) transmission, determining that a HARQ-ACK feedback of the PDCCH indicating the SPS resource release is mapped to a feedback position determined according to a reference time domain resource in a HARQ-ACK feedback sequence;
receiving the HARQ-ACK feedback sequence including the HARQ-ACK feedback of the PDCCH indicating the SPS resource release.

Optionally, the processor 700 is configured to read the program stored in the memory to perform determining that the HARQ-ACK feedback of the PDCCH indicating the SPS resource release is mapped to the feedback position determined according to the reference time domain resource in the HARQ-ACK feedback sequence when a first condition being at least one of the following conditions is met:
a sum of a quantity B1 of the SPS PDSCH to be sent and a quantity B2 of the PDCCH indicating the SPS resource release does not exceed a first value; where the first value is a maximum quantity of unicast PDSCHs capable of being received in one slot;
a sum of a quantity B1 of the SPS PDSCH to be sent and a quantity B2 of the PDCCH indicating the SPS resource release does not exceed a second value; where the second value is a quantity of downlink transmission opportunities in the slot;
where B1 and B2 are both positive integers greater than or equal to 1.

Optionally, the processor 700 is configured to read the program stored in the memory to perform determining that the HARQ-ACK feedback of the PDCCH indicating the SPS resource release is mapped to the feedback position determined according to the reference time domain resource in the HARQ-ACK feedback sequence when a second condition being at least one of the following conditions is met:
a first second condition is one of the following conditions:
the SPS PDSCH indicated to be released by the PDCCH indicating the SPS resource release does not include any one of the SPS PDSCH to be sent;
the SPS PDSCH to be sent does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be sent includes a part of the SPS PDSCHs indicated to be released by the PDCCH indicating the SPS resource release;
a second second condition is:
   the SPS PDSCH to be sent and the PDCCH indicating the SPS resource release have the same priority;
   a third second condition is:
      the PDCCH indicating the SPS resource release and the SPS PDSCH to be sent perform a HARQ-ACK transmission in the same slot or sub-slot;
      a fourth second condition is:
         the SPS PDSCH to be sent and the PDCCH indicating the SPS resource release are transmitted on the same carrier;
         a fifth second condition is:
            a maximum quantity of unicast PDSCH capable of being received by the terminal in one slot is greater than 1 or equal to 1;
            a sixth second condition is:
               the terminal configures a semi-static hybrid automatic repeat request acknowledgement information transmission mode.

Optionally, the processor is configured to read the program stored in the memory to perform:
determining the reference time domain resource as one of:
a time domain resource indicated by the PDCCH indicating the SPS resource release;
a time domain resource corresponding to the SPS PDSCH indicated to be released by the PDCCH indicating the SPS resource release.

Optionally, when the reference time domain resource is a time domain resource corresponding to the SPS PDSCH indicated to be released by the PDCCH indicating the SPS resource release,
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs.

Optionally, the reference time domain resource is not overlapped with the time domain resource of the SPS PDSCH to be received, or the reference time domain resource and the SPS PDSCH to be received do not correspond to the same index of downlink transmission opportunity;
or,
when the reference time domain resource is overlapped with the time domain resource of at least one SPS PDSCH in the SPS PDSCH to be received or corresponds to the same index of downlink transmission opportunity, not performing a HARQ-ACK feedback for the SPS PDSCH which is overlapped with the reference time domain resource or corresponds to the same index of downlink transmission opportunity in the SPS PDSCH to be received.

Optionally, the not performing the HARQ-ACK feedback for the SPS PDSCH which is overlapped with the reference time domain resource or corresponds to the same index of downlink transmission opportunity in the SPS PDSCH to be received when the reference time domain resource is overlapped with the time domain resource of at least one SPS PDSCH in the SPS PDSCH to be received or corresponds to the same index of downlink transmission opportunity further includes:
transmitting the PDCCH indicating the SPS resource release, no later than a position of a starting symbol or an ending symbol of the SPS PDSCH which is overlapped with the reference time domain resource or corresponds to the same index of downlink transmission opportunity in the SPS PDSCH to be received in the slot.

Optionally, the reference time domain resource does not collide with an uplink symbol in the slot.

Optionally, the SPS PDSCH to be received satisfies at least one of the following conditions:
the SPS PDSCH is an SPS PDSCH which needs HARQ-ACK;
the SPS PDSCH is determined not to be collided with an uplink symbol according to a slot structure configured by a high-layer signaling.

Additionally, in Fig. 7, the bus architecture may include any number of interconnected buses and bridges, with various circuits being linked together, in particular, one or more processors, represented by processor 700, and memory, represented by memory 720. The bus architecture may also link together various other circuits such as peripherals, voltage regulators, power management circuits, and the like, which are well known in the art, and therefore, will not be described any further herein. The bus interface provides an interface. The transceiver 710 may be a plurality of elements including a transmitter and a receiver that provide a means for communicating with various other apparatus over a transmission medium. The processor 700 is responsible for managing the bus architecture and general processing, and the memory 720 may store data used by the processor 700 in performing operations.

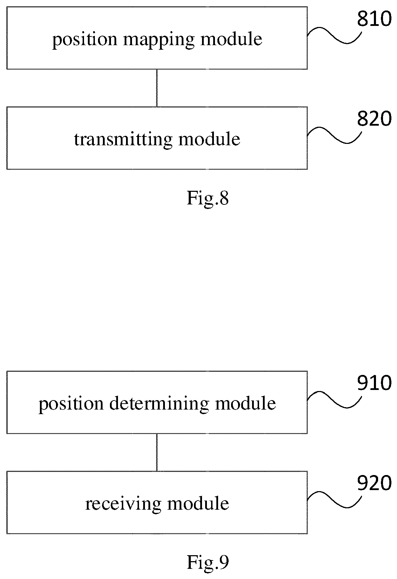

An embodiment of the present disclosure further provides a HARQ-ACK feedback device for HARQ-ACK, which is applied to a terminal, and as shown in Fig. 8, the device includes:
a position mapping module 810, configured to, if a Physical Downlink Control Channel (PDCCH) indicating a Semi-Persistent Scheduling (SPS) resource release is received in a slot for receiving an SPS Physical Downlink Shared Channel (PDSCH) transmission, map a HARQ-ACK feedback of the PDCCH indicating the SPS resource release, to a feedback position determined according to a reference time domain resource in a HARQ-ACK feedback sequence;
a transmitting module 820, configured to transmit the HARQ-ACK feedback sequence including the HARQ-ACK feedback of the PDCCH indicating the SPS resource release.

Optionally, the mapping the HARQ-ACK feedback of the PDCCH indicating the SPS resource release to the feedback position determined according to the reference time domain resource in the HARQ-ACK feedback sequence when a first condition being at least one of the following conditions is met:
a sum of a quantity B1 of the SPS PDSCH to be received and a quantity B2 of the PDCCH indicating the SPS resource release does not exceed a first value; where the first value is a maximum quantity of unicast PDSCHs capable of being received in one slot;
a sum of a quantity B1 of the SPS PDSCH to be received and a quantity B2 of the PDCCH indicating the SPS resource release does not exceed a second value; where the second value is a quantity of downlink transmission opportunities in the slot;
where B1 and B2 are both positive integers greater than or equal to 1.

Optionally, the terminal does not expect to receive B2 PDCCHs indicating the SPS resource release in a slot containing B1 SPS PDSCH transmissions to be received, and the sum of B1 and B2 exceeds the first value, and/or the terminal does not expect to receive B2 PDCCHs indicating the SPS resource release in a slot containing B1 SPS PDSCH transmissions to be received, and the sum of B1 and B2 exceeds the second value.

Optionally, the position mapping module 810 is further configured to perform: mapping the HARQ-ACK feedback of the PDCCH indicating the SPS resource release to the feedback position determined according to the reference time domain resource in the HARQ-ACK feedback sequence when a second condition being at least one of the following conditions is met:
a first second condition is one of the following conditions:
the SPS PDSCH indicated to be released by the PDCCH indicating the SPS resource release does not include any one of the SPS PDSCH to be received;
the SPS PDSCH to be received does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be received includes a part of the SPS PDSCHs indicated to be released by the PDCCH indicating the SPS resource release;
a second second condition is:
   the SPS PDSCH to be received and the PDCCH indicating the SPS resource release have the same priority;
   a third second condition is:
      the PDCCH indicating the SPS resource release and the SPS PDSCH to be received perform a HARQ-ACK transmission in the same slot or sub-slot;
      a fourth second condition is:
         the SPS PDSCH to be received and the PDCCH indicating the SPS resource release are transmitted on the same carrier;
         a fifth second condition is:
            a maximum quantity of unicast PDSCH capable of being received by the terminal in one slot is greater than 1 or equal to 1;
            a sixth second condition is:
               the terminal configures a semi-static hybrid automatic repeat request acknowledgement information transmission mode.

Optionally, the position mapping module 810 is further configured to perfrom: determining the reference time domain resource as one of:
a time domain resource indicated by the PDCCH indicating the SPS resource release;
a time domain resource corresponding to the SPS PDSCH indicated to be released by the PDCCH indicating the SPS resource release.

Optionally, when the reference time domain resource is the time domain resource corresponding to the SPS PDSCH indicated to be released by the PDCCH indicating SPS resource release,
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs.

Optionally, the reference time domain resource is not overlapped with the time domain resource of the SPS PDSCH to be received, or the reference time domain resource and the SPS PDSCH to be received do not correspond to the same index of downlink transmission opportunity;
or,
when the reference time domain resource is overlapped with the time domain resource of at least one SPS PDSCH in the SPS PDSCH to be received or corresponds to the same index of downlink transmission opportunity, not performing a HARQ-ACK feedback for the SPS PDSCH which is overlapped with the reference time domain resource or corresponds to the same index of downlink transmission opportunity in the SPS PDSCH to be received.

Optionally, the not performing the HARQ-ACK feedback for the SPS PDSCH which is overlapped with the reference time domain resource or corresponds to the same index of downlink transmission opportunity in the SPS PDSCH to be received when the reference time domain resource is overlapped with the time domain resource of at least one SPS PDSCH in the SPS PDSCH to be received or corresponds to the same index of downlink transmission opportunity further includes:
transmitting the PDCCH indicating the SPS resource release, no later than a position of a starting symbol or an ending symbol of the SPS PDSCH which is overlapped with the reference time domain resource or corresponds to the same index of downlink transmission opportunity in the SPS PDSCH to be received in the slot.

Optionally, the reference time domain resource does not collide with an uplink symbol in the slot.

Optionally, the SPS PDSCH to be received satisfies at least one of the following conditions:
the SPS PDSCH is an SPS PDSCH which needs HARQ-ACK;
the SPS PDSCH is determined not to be collided with an uplink symbol according to a slot structure configured by a high-layer signaling.

The embodiment of the present disclosure further provides a HARQ-ACK feedback device for HARQ-ACK, which is applied to a base station, and as shown in Fig. 9, the device includes:
a position determining module 910, configured to, if a Physical Downlink Control Channel (PDCCH) indicating a Semi-Persistent Scheduling (SPS) resource release is sent in a slot for sending an SPS Physical Downlink Shared Channel (PDSCH) transmission, determine that a HARQ-ACK feedback of the PDCCH indicating the SPS resource release is mapped to a feedback position determined according to a reference time domain resource in a HARQ-ACK feedback sequence;
a receiving module 920, receive the HARQ-ACK feedback sequence including the HARQ-ACK feedback of the PDCCH indicating the SPS resource release.

Optionally, the position determining module 910 is further configured to perform: determining that the HARQ-ACK feedback of the PDCCH indicating the SPS resource release is mapped to the feedback position determined according to the reference time domain resource in the HARQ-ACK feedback sequence when a first condition being at least one of the following conditions is met:
a sum of a quantity B1 of the SPS PDSCH to be sent and a quantity B2 of the PDCCH indicating the SPS resource release does not exceed a first value; where the first value is a maximum quantity of unicast PDSCHs capable of being received in one slot;
a sum of a quantity B1 of the SPS PDSCH to be sent and a quantity B2 of the PDCCH indicating the SPS resource release does not exceed a second value; where the second value is a quantity of downlink transmission opportunities in the slot;
where B1 and B2 are both positive integers greater than or equal to 1.

Optionally, the position determining module 910 is further configured to perform: determining that the HARQ-ACK feedback of the PDCCH indicating the SPS resource release is mapped to the feedback position determined according to the reference time domain resource in the HARQ-ACK feedback sequence when a second condition being at least one of the following conditions is met:
a first second condition is one of the following conditions:
the SPS PDSCH indicated to be released by the PDCCH indicating the SPS resource release does not include any one of the SPS PDSCH to be sent;
the SPS PDSCH to be sent does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be sent includes a part of the SPS PDSCHs indicated to be released by the PDCCH indicating the SPS resource release;
a second second condition is:
   the SPS PDSCH to be sent and the PDCCH indicating the SPS resource release have the same priority;
   a third second condition is:
      the PDCCH indicating the SPS resource release and the SPS PDSCH to be sent perform a HARQ-ACK transmission in the same slot or sub-slot;
      a fourth second condition is:
         the SPS PDSCH to be sent and the PDCCH indicating the SPS resource release are transmitted on the same carrier;
         a fifth second condition is:
            a maximum quantity of unicast PDSCH capable of being received by the terminal in one slot is greater than 1 or equal to 1;
            a sixth second condition is:
               the terminal configures a semi-static hybrid automatic repeat request acknowledgement information transmission mode.

Optionally, the position determining module 910 is further configured to perform: determining the reference time domain resource as one of:
a time domain resource indicated by the PDCCH indicating the SPS resource release;
a time domain resource corresponding to the SPS PDSCH indicated to be released by the PDCCH indicating the SPS resource release.

Optionally, when the reference time domain resource is a time domain resource corresponding to the SPS PDSCH indicated to be released by the PDCCH indicating the SPS resource release, the method further includes:
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs.

Optionally, the reference time domain resource is not overlapped with the time domain resource of the SPS PDSCH to be received, or the reference time domain resource and the SPS PDSCH to be received do not correspond to the same index of downlink transmission opportunity;
or,
when the reference time domain resource is overlapped with the time domain resource of at least one SPS PDSCH in the SPS PDSCH to be received or corresponds to the same index of downlink transmission opportunity, not performing a HARQ-ACK feedback for the SPS PDSCH which is overlapped with the reference time domain resource or corresponds to the same index of downlink transmission opportunity in the SPS PDSCH to be received.

Optionally, the not performing the HARQ-ACK feedback for the SPS PDSCH which is overlapped with the reference time domain resource or corresponds to the same index of downlink transmission opportunity in the SPS PDSCH to be received when the reference time domain resource is overlapped with the time domain resource of at least one SPS PDSCH in the SPS PDSCH to be received or corresponds to the same index of downlink transmission opportunity further includes:
transmitting the PDCCH indicating the SPS resource release, no later than a position of a starting symbol or an ending symbol of the SPS PDSCH which is overlapped with the reference time domain resource or corresponds to the same index of downlink transmission opportunity in the SPS PDSCH to be received in the slot.

Optionally, the reference time domain resource does not collide with an uplink symbol in the slot.

Optionally, the SPS PDSCH to be received satisfies at least one of the following conditions:
the SPS PDSCH is an SPS PDSCH which needs HARQ-ACK;
the SPS PDSCH is determined not to be collided with an uplink symbol according to a slot structure configured by a high-layer signaling.

An embodiment of the present disclosure further provides a processor-readable storage medium, where a program is stored in the processor-readable storage medium, and when the program is executed by a processor, the program implements each process of any embodiment of the HARQ-ACK feedback method described above, and can achieve the same technical effect, and in order to avoid repetition, the detailed description is omitted here.

The processor-readable storage medium may be a Read-Only Memory (ROM), a Random Access Memory (RAM), a magnetic disk or an optical disk.

It should be noted that, in this document, the terms "includes," "including," or any other variation thereof, are intended to cover a non-exclusive inclusion, such that a process, method, article, or apparatus that includes a list of elements does not include only those elements but may include other elements not expressly listed or inherent to such process, method, article, or apparatus. Without further limitation, an element identified by the phrase "including an ......" does not exclude the presence of other identical elements in the process, method, article, or apparatus that includes the element.

Through the description of the foregoing embodiments, it is clear to those skilled in the art that the method of the foregoing embodiments may be implemented by software plus a necessary general hardware platform, and certainly may also be implemented by hardware, but in many cases, the former is a better implementation. Based on such understanding, the technical solutions of the present disclosure may be embodied in the form of a software product, which is stored in a storage medium (such as a ROM/RAM, a magnetic disk, and an optical disk), and includes several instructions for enabling a terminal (which may be a mobile phone, a computer, a server, an air conditioner, or a network device) to perform the methods according to the embodiments of the present disclosure.

While the foregoing is directed to alternative embodiments of the present disclosure, it will be appreciated by those skilled in the art that various changes and modifications may be made therein without departing from the principles of the disclosure, and it is intended that such changes and modifications be covered by the scope of the disclosure.

## Claims

1. A Hybrid Automatic Repeat Request Acknowledgement, HARQ-ACK, feedback method performed by a terminal, the method comprising:
if a Physical Downlink Control Channel, PDCCH, indicating a Semi-Persistent Scheduling, SPS, resource release is received in a slot for receiving an SPS Physical Downlink Shared Channel, PDSCH, transmission, and the conditions that the SPS PDSCH to be received and the PDCCH indicating the SPS resource release have the same priority, and the PDCCH indicating the SPS resource release and the SPS PDSCH to be received perform a HARQ-ACK transmission in the same slot or sub-slot are met, mapping (S210) a HARQ-ACK feedback of the PDCCH indicating the SPS resource release, to a feedback position determined according to a reference time domain resource in a HARQ-ACK feedback sequence;
transmitting (S220) the HARQ-ACK feedback sequence comprising the HARQ-ACK feedback of the PDCCH indicating the SPS resource release.

2. The HARQ-ACK feedback method according to claim 1, wherein the method further comprises: mapping the HARQ-ACK feedback of the PDCCH indicating the SPS resource release to the feedback position determined according to the reference time domain resource in the HARQ-ACK feedback sequence when a first condition being at least one of the following conditions is further met:
a sum of a quantity B1 of the SPS PDSCH to be received and a quantity B2 of the PDCCH indicating the SPS resource release does not exceed a first value; wherein the first value is a maximum quantity of unicast PDSCHs capable of being received in one slot;
a sum of a quantity B1 of the SPS PDSCH to be received and a quantity B2 of the PDCCH indicating the SPS resource release does not exceed a second value; wherein the second value is a quantity of downlink transmission opportunities in the slot;
wherein B1 and B2 are both positive integers greater than or equal to 1;
and/or
the method further comprises: mapping the HARQ-ACK feedback of the PDCCH indicating the SPS resource release to the feedback position determined according to the reference time domain resource in the HARQ-ACK feedback sequence when a second condition being at least one of the following conditions is further met:
a first second condition is one of the following conditions:
the SPS PDSCH indicated to be released by the PDCCH indicating the SPS resource release does not include any one of the SPS PDSCH to be received;
the SPS PDSCH to be received does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be received comprises a part of the SPS PDSCHs indicated to be released by the PDCCH indicating the SPS resource release;
a fourth second condition is:
the SPS PDSCH to be received and the PDCCH indicating the SPS resource release are transmitted on the same carrier;
a fifth second condition is:
a maximum quantity of unicast PDSCH capable of being received by the terminal in one slot is greater than 1 or equal to 1;
a sixth second condition is:
the terminal configures a semi-static hybrid automatic repeat request acknowledgement information transmission mode.

3. The HARQ-ACK feedback method according to claim 1, wherein the method further comprises:
determining the reference time domain resource as one of:
a time domain resource indicated by the PDCCH indicating the SPS resource release;
a time domain resource corresponding to an SPS PDSCH indicated to be released by the PDCCH indicating the SPS resource release;
and/or
the reference time domain resource is not overlapped with the time domain resource of the SPS PDSCH to be received, or the reference time domain resource and the SPS PDSCH to be received do not correspond to the same index of downlink transmission opportunity;
or,
when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity, not performing a HARQ-ACK feedback for the target SPS PDSCH;
and/or
the reference time domain resource does not collide with an uplink symbol in the slot;
wherein the SPS PDSCH to be received satisfies at least one of the following conditions:
the SPS PDSCH is an SPS PDSCH for which a HARQ-ACK feedback is needed;
the SPS PDSCH is determined not to be collided with an uplink symbol according to a slot structure configured by a high-layer signaling.

4. The HARQ-ACK feedback method according to claim 3, wherein when the reference time domain resource is the time domain resource corresponding to an SPS PDSCH indicated to be released by the PDCCH indicating SPS resource release,
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs;
the not performing a HARQ-ACK feedback for the target SPS PDSCH when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity further comprises:
transmitting the PDCCH indicating the SPS resource release, no later than a position of a starting symbol or an ending symbol of the target SPS PDSCH.

5. A Hybrid Automatic Repeat Request Acknowledgement, HARQ-ACK, feedback method performed by a base station, the method comprising:
if a Physical Downlink Control Channel, PDCCH, indicating a Semi-Persistent Scheduling, SPS, resource release is sent in a slot for sending an SPS Physical Downlink Shared Channel, PDSCH, transmission, and conditions that the SPS PDSCH to be sent and the PDCCH indicating the SPS resource release have the same priority and the PDCCH indicating the SPS resource release and the SPS PDSCH to be sent perform a HARQ-ACK transmission in the same slot or sub-slot are met, determining (S410) that a HARQ-ACK feedback of the PDCCH indicating the SPS resource release is mapped to a feedback position determined according to a reference time domain resource in a HARQ-ACK feedback sequence;
receiving (S420) the HARQ-ACK feedback sequence comprising the HARQ-ACK feedback of the PDCCH indicating the SPS resource release.

6. The HARQ-ACK feedback method according to claim 5, wherein the method further comprises: determining that the HARQ-ACK feedback of the PDCCH indicating the SPS resource release is mapped to the feedback position determined according to the reference time domain resource in the HARQ-ACK feedback sequence when a first condition being at least one of the following conditions is further met:
a sum of a quantity B1 of the SPS PDSCH to be sent and a quantity B2 of the PDCCH indicating the SPS resource release does not exceed a first value; wherein the first value is a maximum quantity of unicast PDSCHs capable of being received in one slot;
a sum of a quantity B1 of the SPS PDSCH to be sent and a quantity B2 of the PDCCH indicating the SPS resource release does not exceed a second value; wherein the second value is a quantity of downlink transmission opportunities in the slot;
wherein B1 and B2 are both positive integers greater than or equal to 1;
and/or
the method further comprises: determining that the HARQ-ACK feedback of the PDCCH indicating the SPS resource release is mapped to the feedback position determined according to the reference time domain resource in the HARQ-ACK feedback sequence when a second condition being at least one of the following conditions is further met:
a first second condition is one of the following conditions:
the SPS PDSCH indicated to be released by the PDCCH indicating the SPS resource release does not include any one of the SPS PDSCH to be sent;
the SPS PDSCH to be sent does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be sent comprises a part of the SPS PDSCHs indicated to be released by the PDCCH indicating the SPS resource release;
a fourth second condition is:
the SPS PDSCH to be sent and the PDCCH indicating the SPS resource release are transmitted on the same carrier;
a fifth second condition is:
a maximum quantity of unicast PDSCH capable of being received by the terminal in one slot is greater than 1 or equal to 1;
a sixth second condition is:
the terminal configures a semi-static hybrid automatic repeat request acknowledgement information transmission mode.

7. The HARQ-ACK feedback method according to claim 5, wherein the method further comprises:
determining the reference time domain resource as one of:
a time domain resource indicated by the PDCCH indicating the SPS resource release;
a time domain resource corresponding to an SPS PDSCH indicated to be released by the PDCCH indicating the SPS resource release;
and/or
the reference time domain resource is not overlapped with the time domain resource of the SPS PDSCH to be received, or the reference time domain resource and the SPS PDSCH to be received do not correspond to the same index of downlink transmission opportunity;
or,
when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity, not performing a HARQ-ACK feedback for the target SPS PDSCH;
and/or
the reference time domain resource does not collide with an uplink symbol in the slot;
wherein the SPS PDSCH to be received satisfies at least one of the following conditions:
the SPS PDSCH is an SPS PDSCH for which a HARQ-ACK feedback is needed;
the SPS PDSCH is determined not to be collided with an uplink symbol according to a slot structure configured by a high-layer signaling.

8. The HARQ-ACK feedback method according to claim 7, wherein when the reference time domain resource is a time domain resource corresponding to an SPS PDSCH indicated to be released by the PDCCH indicating the SPS resource release, the method further comprises:
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the slot in the jointly released plurality of SPS PDSCHs;
the not performing a HARQ-ACK feedback for the target SPS PDSCH when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity further comprises:
transmitting the PDCCH indicating the SPS resource release, no later than a position of a starting symbol or an ending symbol of the target SPS PDSCH.

9. A Hybrid Automatic Repeat Request Acknowledgement, HARQ-ACK, feedback device, applied to a terminal and comprising:
a position mapping module (810), configured to, if a Physical Downlink Control Channel, PDCCH, indicating a Semi-Persistent Scheduling, SPS, resource release is received in a slot for receiving an SPS Physical Downlink Shared Channel, PDSCH, transmission, and the conditions that the SPS PDSCH to be received and the PDCCH indicating the SPS resource release have the same priority, and the PDCCH indicating the SPS resource release and the SPS PDSCH to be received perform a HARQ-ACK transmission in the same slot or sub-slot are met, map a HARQ-ACK feedback of the PDCCH indicating the SPS resource release, to a feedback position determined according to a reference time domain resource in a HARQ-ACK feedback sequence;
a transmitting module (820), configured to transmit the HARQ-ACK feedback sequence comprising the HARQ-ACK feedback of the PDCCH indicating the SPS resource release.

10. The device according to claim 9, wherein the position mapping module (810) is further configured to: map the HARQ-ACK feedback of the PDCCH indicating the SPS resource release to the feedback position determined according to the reference time domain resource in the HARQ-ACK feedback sequence when a first condition being at least one of the following conditions is further met:
a sum of a quantity B1 of the SPS PDSCH to be received and a quantity B2 of the PDCCH indicating the SPS resource release does not exceed a first value; wherein the first value is a maximum quantity of unicast PDSCHs capable of being received in one slot;
a sum of a quantity B1 of the SPS PDSCH to be received and a quantity B2 of the PDCCH indicating the SPS resource release does not exceed a second value; wherein the second value is a quantity of downlink transmission opportunities in the slot;
wherein B1 and B2 are both positive integers greater than or equal to 1;
and/or
the position mapping module (810) is further configured to: map the HARQ-ACK feedback of the PDCCH indicating the SPS resource release to the feedback position determined according to the reference time domain resource in the HARQ-ACK feedback sequence when a second condition being at least one of the following conditions is further met:
a first second condition is one of the following conditions:
the SPS PDSCH indicated to be released by the PDCCH indicating the SPS resource release does not include any one of the SPS PDSCH to be received;
the SPS PDSCH to be received does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be received comprises a part of the SPS PDSCHs indicated to be released by the PDCCH indicating the SPS resource release;
a fourth second condition is:
the SPS PDSCH to be received and the PDCCH indicating the SPS resource release are transmitted on the same carrier;
a fifth second condition is:
a maximum quantity of unicast PDSCH capable of being received by the terminal in one slot is greater than 1 or equal to 1;
a sixth second condition is:
the terminal configures a semi-static hybrid automatic repeat request acknowledgement information transmission mode.

11. The device according to claim 9, wherein the position mapping module (810) is further configured to:
determine the reference time domain resource as one of:
a time domain resource indicated by the PDCCH indicating the SPS resource release;
a time domain resource corresponding to an SPS PDSCH indicated to be released by the PDCCH indicating the SPS resource release;
and/or
the reference time domain resource is not overlapped with the time domain resource of the SPS PDSCH to be received, or the reference time domain resource and the SPS PDSCH to be received do not correspond to the same index of downlink transmission opportunity;
or,
the position mapping module (810) is further configured to: when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity, not perform a HARQ-ACK feedback for the target SPS PDSCH;
and/or
the reference time domain resource does not collide with an uplink symbol in the slot;
wherein the SPS PDSCH to be received satisfies at least one of the following conditions:
the SPS PDSCH is an SPS PDSCH for which a HARQ-ACK feedback is needed;
the SPS PDSCH is determined not to be collided with an uplink symbol according to a slot structure configured by a high-layer signaling.

12. The device according to claim 11, wherein when the reference time domain resource is the time domain resource corresponding to an SPS PDSCH indicated to be released by the PDCCH indicating SPS resource release,
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the jointly released plurality of SPS PDSCHs;
when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity, the position mapping module (810) is further configured to:
transmit the PDCCH indicating the SPS resource release, no later than a position of a starting symbol or an ending symbol of the target SPS PDSCH.

13. A Hybrid Automatic Repeat Request Acknowledgement (HARQ-ACK) feedback device, applied to a base station and comprising:
a position determining module (910), configured to, if a Physical Downlink Control Channel, PDCCH, indicating a Semi-Persistent Scheduling, SPS, resource release is sent in a slot for sending an SPS Physical Downlink Shared Channel, PDSCH, transmission, and conditions that the SPS PDSCH to be sent and the PDCCH indicating the SPS resource release have the same priority and the PDCCH indicating the SPS resource release and the SPS PDSCH to be sent perform a HARQ-ACK transmission in the same slot or sub-slot are met, determine that a HARQ-ACK feedback of the PDCCH indicating the SPS resource release is mapped to a feedback position determined according to a reference time domain resource in a HARQ-ACK feedback sequence;
a receiving module (920), configured to receive the HARQ-ACK feedback sequence comprising the HARQ-ACK feedback of the PDCCH indicating the SPS resource release.

14. The device according to claim 13, wherein the position determining module (910) is further configured to: determine that the HARQ-ACK feedback of the PDCCH indicating the SPS resource release is mapped to the feedback position determined according to the reference time domain resource in the HARQ-ACK feedback sequence when a first condition being at least one of the following conditions is further met:
a sum of a quantity B1 of the SPS PDSCH to be sent and a quantity B2 of the PDCCH indicating the SPS resource release does not exceed a first value; wherein the first value is a maximum quantity of unicast PDSCHs capable of being received in one slot;
a sum of a quantity B1 of the SPS PDSCH to be sent and a quantity B2 of the PDCCH indicating the SPS resource release does not exceed a second value; wherein the second value is a quantity of downlink transmission opportunities in the slot;
wherein B1 and B2 are both positive integers greater than or equal to 1;
and/or
the position determining module (910) is further configured to: determine that the HARQ-ACK feedback of the PDCCH indicating the SPS resource release is mapped to the feedback position determined according to the reference time domain resource in the HARQ-ACK feedback sequence when a second condition being at least one of the following conditions is further met:
a first second condition is one of the following conditions:
the SPS PDSCH indicated to be released by the PDCCH indicating the SPS resource release does not include any one of the SPS PDSCH to be sent;
the SPS PDSCH to be sent does not include a target SPS PDSCH; the target SPS PDSCH is the SPS PDSCH with a minimum or maximum SPS configuration index in the SPS PDSCH indicated to be released by the PDCCH indicating the SPS resource release;
the SPS PDSCH to be sent comprises a part of the SPS PDSCHs indicated to be released by the PDCCH indicating the SPS resource release;
a fourth second condition is:
the SPS PDSCH to be sent and the PDCCH indicating the SPS resource release are transmitted on the same carrier;
a fifth second condition is:
a maximum quantity of unicast PDSCH capable of being received by the terminal in one slot is greater than 1 or equal to 1;
a sixth second condition is:
the terminal configures a semi-static hybrid automatic repeat request acknowledgement information transmission mode.

15. The device according to claim 13, wherein the position determining module (910) is further configured to:
determine the reference time domain resource as one of:
a time domain resource indicated by the PDCCH indicating the SPS resource release;
a time domain resource corresponding to an SPS PDSCH indicated to be released by the PDCCH indicating the SPS resource release;
and/or
the reference time domain resource is not overlapped with the time domain resource of the SPS PDSCH to be received, or the reference time domain resource and the SPS PDSCH to be received do not correspond to the same index of downlink transmission opportunity;
or,
the position determining module (910) is further configured to: when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity, not perform a HARQ-ACK feedback for the target SPS PDSCH;
and/or
the reference time domain resource does not collide with an uplink symbol in the slot;
wherein the SPS PDSCH to be received satisfies at least one of the following conditions:
the SPS PDSCH is an SPS PDSCH for which a HARQ-ACK feedback is needed;
the SPS PDSCH is determined not to be collided with an uplink symbol according to a slot structure configured by a high-layer signaling.

16. The device according to claim 15, wherein when the reference time domain resource is a time domain resource corresponding to an SPS PDSCH indicated to be released by the PDCCH indicating the SPS resource release,
when the PDCCH indicating the SPS resource release indicates releasing one SPS PDSCH, the reference time domain resource is the time domain resource corresponding to the released SPS PDSCH;
when the PDCCH indicating the SPS resource release indicates jointly releasing a plurality of SPS PDSCHs, the reference time domain resource is a time domain resource corresponding to an SPS PDSCH with a minimum or maximum SPS configuration index within the jointly released plurality of SPS PDSCHs, or the reference time domain resource is a time domain resource corresponding to an SPS PDSCH transmitted in the slot with a minimum or maximum SPS configuration index within the slot in the jointly released plurality of SPS PDSCHs;
when the reference time domain resource is overlapped with the time domain resource of a target SPS PDSCH within the SPS PDSCH to be received or the reference time domain resource and a target SPS PDSCH within the SPS PDSCH to be received correspond to the same index of downlink transmission opportunity, the position determining module (910) is further configured to:
transmit the PDCCH indicating the SPS resource release, no later than a position of a starting symbol or an ending symbol of the target SPS PDSCH.

## Patentansprüche

1. Hybrid-Automatic-Repeat-Request-Acknowledgement-Rückmeldungsverfahren, HARQ-ACK-Rückmeldungsverfahren, das von einem Endgerät durchgeführt wird, das Verfahren umfassend:
wenn ein Physical Downlink Control Channel, PDCCH, der eine Semi-Persistent-Scheduling-Ressourcenfreigabe, SPS-Ressourcenfreigabe, anzeigt, in einem Schlitz für den Empfang einer SPS-Physical-Downlink-Shared-Channel-Übertragung, SPS-PDSCH-Übertragung, empfangen wird und die Bedingungen erfüllt sind, dass der zu empfangende SPS-PDSCH und PDCCH, der die SPS-Ressourcenfreigabe anzeigt, die gleiche Priorität haben und der PDCCH, der die SPS-Ressourcenfreigabe anzeigt, und der zu empfangende SPS-PDSCH im selben Schlitz oder Unterschlitz eine HARQ-ACK-Übertragung durchführen, Zuordnen (S210) einer HARQ-ACK-Rückmeldung des PDCCH, der die SPS-Ressourcenfreigabe anzeigt, zu einer Rückmeldungsposition, die gemäß einer Referenzzeitdomänenressource in einer HARQ-ACK-Rückmeldungssequenz bestimmt wird;
Übertragen (S220) der HARQ-ACK-Rückmeldungssequenz, die die HARQ-ACK-Rückmeldung des PDCCH umfasst, der die SPS-Ressourcenfreigabe anzeigt.

2. HARQ-ACK-Rückmeldungsverfahren nach Anspruch 1, wobei das Verfahren ferner Folgendes umfasst: Zuordnen der HARQ-ACK-Rückmeldung des PDCCH, der die SPS-Ressourcenfreigabe anzeigt, zu der Rückmeldungsposition, die gemäß der Referenzzeitdomänenressource in der HARQ-ACK-Rückmeldungssequenz bestimmt wird, wenn eine erste Bedingung, die mindestens eine der folgenden Bedingungen ist, ferner erfüllt ist:
eine Summe aus einer Menge B1 des zu empfangenden SPS-PDSCH und einer Menge B2 des PDCCH, der die SPS-Ressourcenfreigabe anzeigt, einen ersten Wert nicht überschreitet; wobei der erste Wert eine maximale Anzahl von Unicast-PDSCHs ist, die in einem Schlitz empfangen werden können;
eine Summe aus einer Menge B1 des zu empfangenden SPS-PDSCH und einer Menge B2 des PDCCH, der die SPS-Ressourcenfreigabe anzeigt, einen zweiten Wert nicht überschreitet; wobei der zweite Wert eine Anzahl der Downlink-Übertragungsmöglichkeiten in dem Schlitz ist;
wobei B1 und B2 beide eine positive ganze Zahl größer oder gleich 1 sind;
und/oder
das Verfahren ferner umfassend: Zuordnen der HARQ-ACK-Rückmeldung des PDCCH, der die SPS-Ressourcenfreigabe anzeigt, zu der Rückmeldungsposition, die gemäß der Referenzzeitdomänenressource in der HARQ-ACK-Rückmeldungssequenz bestimmt wird, wenn eine zweite Bedingung, die mindestens eine der folgenden Bedingungen ist, ferner erfüllt ist:
eine erste zweite Bedingung ist eine der folgenden Bedingungen:
der durch den PDCCH, der die SPS-Ressourcenfreigabe anzeigt, zur Freigabe angezeigte SPS-PDSCH schließt keinen der zu empfangenden SPS-PDSCH ein;
der zu empfangende SPS-PDSCH schließt keinen Ziel-SPS-PDSCH ein; der Ziel-SPS-PDSCH ist der SPS-PDSCH mit einem minimalen oder maximalen SPS-Konfigurationsindex in dem SPS-PDSCH, der durch den PDCCH, der die SPS-Ressourcenfreigabe anzeigt, zur Freigabe angezeigt wird;
der zu empfangende SPS-PDSCH umfasst einen Teil der SPS-PDSCHs, die durch den PDCCH, der die SPS-Ressourcenfreigabe anzeigt, zur Freigabe angezeigt werden;
eine vierte zweite Bedingung ist:
der zu empfangende SPS-PDSCH und der PDCCH, der die SPS-Ressourcenfreigabe anzeigt, werden auf demselben Träger übertragen;
eine fünfte zweite Bedingung ist:
die maximale Anzahl von Unicast-PDSCH, die das Endgerät in einem Schlitz empfangen kann, ist größer als 1 oder gleich 1;
eine sechste zweite Bedingung ist:
das Endgerät konfiguriert einen Semi-Static-Hybrid-Automatic-Repeat-Request-Acknowledgement-Informationsübertragungsmodus.

3. HARQ-ACK-Rückmeldungsverfahren nach Anspruch 1, wobei das Verfahren ferner umfasst:
Bestimmen der Referenzzeitdomänenressource als eine der folgenden:
eine durch den PDCCH, der die SPS-Ressourcenfreigabe anzeigt, angezeigte Zeitdomänenressource;
eine Zeitdomänenressource, die einem SPS-PDSCH entspricht, der durch den PDCCH, der die SPS-Ressourcenfreigabe anzeigt, zur Freigabe angezeigt wird;
und/oder
die Referenzzeitdomänenressource überschneidet sich nicht mit der Zeitdomänenressource des zu empfangenden SPS-PDSCH, oder die Referenzzeitdomänenressource und der zu empfangende SPS-PDSCH entsprechen nicht demselben Index der Downlink-Übertragungsmöglichkeit;
oder
wenn sich die Referenzzeitdomänenressource mit der Zeitdomänenressource eines Ziel-SPS-PDSCH innerhalb des zu empfangenden SPS-PDSCH überschneidet oder die Referenzzeitdomänenressource und ein Ziel-SPS-PDSCH innerhalb des zu empfangenden SPS-PDSCH dem gleichen Index der Downlink-Übertragungsmöglichkeit entsprechen, wird keine HARQ-ACK-Rückmeldung für den Ziel-SPS-PDSCH durchgeführt;
und/oder
die Referenzzeitdomänenressource kollidiert nicht mit einem Uplink-Symbol im Schlitz;
wobei der zu empfangende SPS-PDSCH mindestens eine der folgenden Bedingungen erfüllt:
der SPS-PDSCH ist ein SPS-PDSCH, für den eine HARQ-ACK-Rückmeldung erforderlich ist;
es wird bestimmt, dass der SPS-PDSCH nicht mit einem Uplink-Symbol gemäß einer durch eine High-Layer-Signalisierung konfigurierten Schlitzstruktur kollidiert.

4. HARQ-ACK-Rückmeldungsverfahren nach Anspruch 3, wobei die Referenzzeitdomänenressource die Zeitdomänenressource ist, die einem SPS-PDSCH entspricht, der durch den PDCCH, der die SPS-Ressourcenfreigabe anzeigt, zur Freigabe angezeigt wird,
wenn der PDCCH, der die SPS-Ressourcenfreigabe anzeigt, die Freigabe eines SPS-PDSCH anzeigt, ist die Referenzzeitdomänenressource die Zeitdomänenressource, die dem freigegebenen SPS-PDSCH entspricht;
wenn der PDCCH, der die SPS-Ressourcenfreigabe anzeigt, die gemeinsame Freigabe einer Vielzahl von SPS-PDSCHs anzeigt, ist die Referenzzeitdomänenressource eine Zeitdomänenressource, die einem SPS-PDSCH mit einem minimalen oder maximalen SPS-Konfigurationsindex innerhalb der gemeinsam freigegebenen Vielzahl von SPS-PDSCHs entspricht, oder die Referenzzeitdomänenressource ist eine Zeitdomänenressource, die einem SPS-PDSCH entspricht, der im Schlitz mit einem minimalen oder maximalen SPS-Konfigurationsindex innerhalb der gemeinsam freigegebenen Vielzahl von SPS-PDSCHs übertragen wird;
das Nicht-Durchführen einer HARQ-ACK-Rückmeldung für den Ziel-SPS-PDSCH, wenn sich die Referenzzeitdomänenressource mit der Zeitdomänenressource eines Ziel-SPS-PDSCH innerhalb des zu empfangenden SPS-PDSCH überschneidet oder die Referenzzeitdomänenressource und ein Ziel-SPS-PDSCH innerhalb des zu empfangenden SPS-PDSCH demselben Index der Downlink-Übertragungsmöglichkeit entsprechen, umfasst ferner:
Übertragen des PDCCH, der die SPS-Ressourcenfreigabe anzeigt, spätestens an der Position eines Startsymbols oder eines Endsymbols des Ziel-SPS-PDSCH.

5. Hybrid-Automatic-Repeat-Request-Acknowledgement-Rückmeldungsverfahren, HARQ-ACK-Rückmeldungsverfahren, das von einer Basisstation durchgeführt wird, das Verfahren umfassend:
wenn ein Physical Downlink Control Channel, PDCCH, der eine Semi-Persistent-Scheduling-Ressourcenfreigabe, SPS-Ressourcenfreigabe, anzeigt, in einem Schlitz für das Senden einer SPS-Physical-Downlink-Shared-Channel-Übertragung, SPS-PDSCH-Übertragung, gesendet wird und die Bedingungen erfüllt sind, dass der zu sendende SPS-PDSCH und der PDCCH, der die SPS-Ressourcenfreigabe anzeigt, die gleiche Priorität haben und der PDCCH, der die SPS-Ressourcenfreigabe anzeigt, und der zu sendende SPS-PDSCH im selben Schlitz oder Unterschlitz eine HARQ-ACK-Übertragung durchführen, Bestimmen (S410), dass eine HARQ-ACK-Rückmeldung des PDCCH, der die SPS-Ressourcenfreigabe anzeigt, zu einer Rückmeldungsposition zugeordnet wird, die gemäß einer Referenzzeitdomänenressource in einer HARQ-ACK-Rückmeldungssequenz bestimmt wird;
Empfangen (S420) der HARQ-ACK-Rückmeldungssequenz, die die HARQ-ACK-Rückmeldung des PDCCH umfasst, der die SPS-Ressourcenfreigabe anzeigt.

6. HARQ-ACK-Rückmeldungsverfahren nach Anspruch 5, wobei das Verfahren ferner Folgendes umfasst: Bestimmen, dass die HARQ-ACK-Rückmeldung des PDCCH, der die SPS-Ressourcenfreigabe anzeigt, zu der Rückmeldungsposition zugeordnet wird, die gemäß der Referenzzeitdomänenressource in der HARQ-ACK-Rückmeldungssequenz bestimmt wird, wenn eine erste Bedingung, die mindestens eine der folgenden Bedingungen ist, ferner erfüllt ist:
eine Summe aus einer Menge B1 des zu sendenden SPS-PDSCH und einer Menge B2 des PDCCH, der die SPS-Ressourcenfreigabe anzeigt, einen ersten Wert nicht überschreitet; wobei der erste Wert eine maximale Anzahl von Unicast-PDSCHs ist, die in einem Schlitz empfangen werden können;
eine Summe aus einer Menge B1 des zu sendenden SPS-PDSCH und einer Menge B2 des PDCCH, der die SPS-Ressourcenfreigabe anzeigt, einen zweiten Wert nicht überschreitet; wobei der zweite Wert eine Anzahl der Downlink-Übertragungsmöglichkeiten in dem Schlitz ist;
wobei B1 und B2 beide eine positive ganze Zahl größer oder gleich 1 sind;
und/oder
das Verfahren ferner umfassend: Bestimmen, dass die HARQ-ACK-Rückmeldung des PDCCH, der die SPS-Ressourcenfreigabe anzeigt, zu der Rückmeldungsposition zugeordnet wird, die gemäß der Referenzzeitdomänenressource in der HARQ-ACK-Rückmeldungssequenz bestimmt wird, wenn eine zweite Bedingung, die mindestens eine der folgenden Bedingungen ist, ferner erfüllt ist:
eine erste zweite Bedingung ist eine der folgenden Bedingungen:
der durch den PDCCH, der die SPS-Ressourcenfreigabe anzeigt, zur Freigabe angezeigte SPS-PDSCH schließt keinen der zu sendenden SPS-PDSCH ein;
der zu sendende SPS-PDSCH schließt keinen Ziel-SPS-PDSCH ein; der Ziel-SPS-PDSCH ist der SPS-PDSCH mit einem minimalen oder maximalen SPS-Konfigurationsindex in dem SPS-PDSCH, der durch den PDCCH, der die SPS-Ressourcenfreigabe anzeigt, zur Freigabe angezeigt wird;
der zu sendende SPS-PDSCH umfasst einen Teil der SPS-PDSCHs, die durch den PDCCH, der die SPS-Ressourcenfreigabe anzeigt, zur Freigabe angezeigt werden;
eine vierte zweite Bedingung ist:
der zu sendende SPS-PDSCH und der PDCCH, der die SPS-Ressourcenfreigabe anzeigt, werden auf demselben Träger übertragen;
eine fünfte zweite Bedingung ist:
die maximale Anzahl von Unicast-PDSCH, die das Endgerät in einem Schlitz empfangen kann, ist größer als 1 oder gleich 1;
eine sechste zweite Bedingung ist:
das Endgerät konfiguriert einen Semi-Static-Hybrid-Automatic-Repeat-Request-Acknowledgement-Informationsübertragungsmodus.

7. HARQ-ACK-Rückmeldungsverfahren nach Anspruch 5, wobei das Verfahren ferner umfasst:
Bestimmen der Referenzzeitdomänenressource als eine der folgenden:
eine durch den PDCCH, der die SPS-Ressourcenfreigabe anzeigt, angezeigte Zeitdomänenressource;
eine Zeitdomänenressource, die einem SPS-PDSCH entspricht, der durch den PDCCH, der die SPS-Ressourcenfreigabe anzeigt, zur Freigabe angezeigt wird;
und/oder
die Referenzzeitdomänenressource überschneidet sich nicht mit der Zeitdomänenressource des zu empfangenden SPS-PDSCH, oder die Referenzzeitdomänenressource und der zu empfangende SPS-PDSCH entsprechen nicht demselben Index der Downlink-Übertragungsmöglichkeit;
oder
wenn sich die Referenzzeitdomänenressource mit der Zeitdomänenressource eines Ziel-SPS-PDSCH innerhalb des zu empfangenden SPS-PDSCH überschneidet oder die Referenzzeitdomänenressource und ein Ziel-SPS-PDSCH innerhalb des zu empfangenden SPS-PDSCH dem gleichen Index der Downlink-Übertragungsmöglichkeit entsprechen, wird keine HARQ-ACK-Rückmeldung für den Ziel-SPS-PDSCH durchgeführt;
und/oder
die Referenzzeitdomänenressource kollidiert nicht mit einem Uplink-Symbol im Schlitz;
wobei der zu empfangende SPS-PDSCH mindestens eine der folgenden Bedingungen erfüllt:
der SPS-PDSCH ist ein SPS-PDSCH, für den eine HARQ-ACK-Rückmeldung erforderlich ist;
es wird bestimmt, dass der SPS-PDSCH nicht mit einem Uplink-Symbol gemäß einer durch eine High-Layer-Signalisierung konfigurierten Schlitzstruktur kollidiert.

8. HARQ-ACK-Rückmeldungsverfahren nach Anspruch 7, wobei die Referenzzeitdomänenressource die Zeitdomänenressource ist, die einem SPS-PDSCH entspricht, der durch den PDCCH, der die SPS-Ressourcenfreigabe anzeigt, zur Freigabe angezeigt wird, das Verfahren ferner umfassend:
wenn der PDCCH, der die SPS-Ressourcenfreigabe anzeigt, die Freigabe eines SPS-PDSCH anzeigt, ist die Referenzzeitdomänenressource die Zeitdomänenressource, die dem freigegebenen SPS-PDSCH entspricht;
wenn der PDCCH, der die SPS-Ressourcenfreigabe anzeigt, die gemeinsame Freigabe einer Vielzahl von SPS-PDSCHs anzeigt, ist die Referenzzeitdomänenressource eine Zeitdomänenressource, die einem SPS-PDSCH mit einem minimalen oder maximalen SPS-Konfigurationsindex innerhalb der gemeinsam freigegebenen Vielzahl von SPS-PDSCHs entspricht, oder die Referenzzeitdomänenressource ist eine Zeitdomänenressource, die einem SPS-PDSCH entspricht, der im Schlitz mit einem minimalen oder maximalen SPS-Konfigurationsindex innerhalb des Schlitzes in der gemeinsam freigegebenen Vielzahl von SPS-PDSCHs übertragen wird;
das Nicht-Durchführen einer HARQ-ACK-Rückmeldung für den Ziel-SPS-PDSCH, wenn sich die Referenzzeitdomänenressource mit der Zeitdomänenressource eines Ziel-SPS-PDSCH innerhalb des zu empfangenden SPS-PDSCH überschneidet oder die Referenzzeitdomänenressource und ein Ziel-SPS-PDSCH innerhalb des zu empfangenden SPS-PDSCH demselben Index der Downlink-Übertragungsmöglichkeit entsprechen, umfasst ferner:
Übertragen des PDCCH, der die SPS-Ressourcenfreigabe anzeigt, spätestens an der Position eines Startsymbols oder eines Endsymbols des Ziel-SPS-PDSCH.

9. Hybrid-Automatic-Repeat-Request-Acknowledgement-Rückmeldungsvorrichtung, HARQ-ACK-Rückmeldungsvorrichtung, angewendet auf ein Endgerät und umfassend:
ein Positionszuordnungsmodul (810), das konfiguriert ist zum, wenn ein Physical Downlink Control Channel, PDCCH, der eine Semi-Persistent-Scheduling-Ressourcenfreigabe, SPS-Ressourcenfreigabe, anzeigt, in einem Schlitz für den Empfang einer SPS-Physical-Downlink-Shared-Channel-Übertragung, SPS-PDSCH-Übertragung, empfangen wird und die Bedingungen erfüllt sind, dass der zu empfangende SPS-PDSCH und der PDCCH, der die SPS-Ressourcenfreigabe anzeigt, die gleiche Priorität haben und der PDCCH, der die SPS-Ressourcenfreigabe anzeigt, und der zu empfangende SPS-PDSCH im selben Schlitz oder Unterschlitz eine HARQ-ACK-Übertragung durchführen, Zuordnen einer HARQ-ACK-Rückmeldung des PDCCH, der die SPS-Ressourcenfreigabe anzeigt, zu einer Rückmeldungsposition, die gemäß einer Referenzzeitdomänenressource in einer HARQ-ACK-Rückmeldungssequenz bestimmt wird;
ein Übertragungsmodul (820), das konfiguriert ist, um die HARQ-ACK-Rückmeldungssequenz zu übertragen, die die HARQ-ACK-Rückmeldung des PDCCH umfasst, der die SPS-Ressourcenfreigabe anzeigt.

10. Vorrichtung nach Anspruch 9, wobei das Positionszuordnungsmodul (810) ferner konfiguriert ist zum: Zuordnen der HARQ-ACK-Rückmeldung des PDCCH, der die SPS-Ressourcenfreigabe anzeigt, zu der Rückmeldungsposition, die gemäß der Referenzzeitdomänenressource in der HARQ-ACK-Rückmeldungssequenz bestimmt wird, wenn eine erste Bedingung, die mindestens eine der folgenden Bedingungen ist, ferner erfüllt ist:
eine Summe aus einer Menge B1 des zu empfangenden SPS-PDSCH und einer Menge B2 des PDCCH, der die SPS-Ressourcenfreigabe anzeigt, einen ersten Wert nicht überschreitet; wobei der erste Wert eine maximale Anzahl von Unicast-PDSCHs ist, die in einem Schlitz empfangen werden können;
eine Summe aus einer Menge B1 des zu empfangenden SPS-PDSCH und einer Menge B2 des PDCCH, der die SPS-Ressourcenfreigabe anzeigt, einen zweiten Wert nicht überschreitet; wobei der zweite Wert eine Anzahl der Downlink-Übertragungsmöglichkeiten in dem Schlitz ist;
wobei B1 und B2 beide eine positive ganze Zahl größer oder gleich 1 sind;
und/oder
das Positionszuordnungsmodul (810) ist ferner konfiguriert zum: Zuordnen der HARQ-ACK-Rückmeldung des PDCCH, der die SPS-Ressourcenfreigabe anzeigt, zu der Rückmeldungsposition, die gemäß der Referenzzeitdomänenressource in der HARQ-ACK-Rückmeldungssequenz bestimmt wird, wenn eine zweite Bedingung erfüllt ist, die mindestens eine der folgenden Bedingungen ist:
eine erste zweite Bedingung ist eine der folgenden Bedingungen:
der durch den PDCCH, der die SPS-Ressourcenfreigabe anzeigt, zur Freigabe angezeigte SPS-PDSCH schließt keinen der zu empfangenden SPS-PDSCH ein;
der zu empfangende SPS-PDSCH schließt keinen Ziel-SPS-PDSCH ein; der Ziel-SPS-PDSCH ist der SPS-PDSCH mit einem minimalen oder maximalen SPS-Konfigurationsindex in dem SPS-PDSCH, der durch den PDCCH, der die SPS-Ressourcenfreigabe anzeigt, zur Freigabe angezeigt wird;
der zu empfangende SPS-PDSCH umfasst einen Teil der SPS-PDSCHs, die durch den PDCCH, der die SPS-Ressourcenfreigabe anzeigt, zur Freigabe angezeigt werden;
eine vierte zweite Bedingung ist:
der zu empfangende SPS-PDSCH und der PDCCH, der die SPS-Ressourcenfreigabe anzeigt, werden auf demselben Träger übertragen;
eine fünfte zweite Bedingung ist:
die maximale Anzahl von Unicast-PDSCH, die das Endgerät in einem Schlitz empfangen kann, ist größer als 1 oder gleich 1;
eine sechste zweite Bedingung ist:
das Endgerät konfiguriert einen Semi-Static-Hybrid-Automatic-Repeat-Request-Acknowledgement-Informationsübertragungsmodus.

11. Vorrichtung nach Anspruch 9, wobei das Positionszuordnungsmodul (810) ferner konfiguriert ist zum:
Bestimmen der Referenzzeitdomänenressource als eine der folgenden:
eine durch den PDCCH, der die SPS-Ressourcenfreigabe anzeigt, angezeigte Zeitdomänenressource;
eine Zeitdomänenressource, die einem SPS-PDSCH entspricht, der durch den PDCCH, der die SPS-Ressourcenfreigabe anzeigt, zur Freigabe angezeigt wird;
und/oder
die Referenzzeitdomänenressource überschneidet sich nicht mit der Zeitdomänenressource des zu empfangenden SPS-PDSCH, oder die Referenzzeitdomänenressource und der zu empfangende SPS-PDSCH entsprechen nicht demselben Index der Downlink-Übertragungsmöglichkeit;
oder
das Positionszuordnungsmodul (810) ist ferner konfiguriert zum: wenn sich die Referenzzeitdomänenressource mit der Zeitdomänenressource eines Ziel-SPS-PDSCH innerhalb des zu empfangenden SPS-PDSCH überschneidet oder die Referenzzeitdomänenressource und ein Ziel-SPS-PDSCH innerhalb des zu empfangenden SPS-PDSCH dem gleichen Index der Downlink-Übertragungsmöglichkeit entsprechen, wird keine HARQ-ACK-Rückmeldung für den Ziel-SPS-PDSCH durchgeführt;
und/oder
die Referenzzeitdomänenressource kollidiert nicht mit einem Uplink-Symbol im Schlitz;
wobei der zu empfangende SPS-PDSCH mindestens eine der folgenden Bedingungen erfüllt:
der SPS-PDSCH ist ein SPS-PDSCH, für den eine HARQ-ACK-Rückmeldung erforderlich ist;
es wird bestimmt, dass der SPS-PDSCH nicht mit einem Uplink-Symbol gemäß einer durch eine High-Layer-Signalisierung konfigurierten Schlitzstruktur kollidiert.

12. Vorrichtung nach Anspruch 11, wobei die Referenzzeitdomänenressource die Zeitdomänenressource ist, die einem SPS-PDSCH entspricht, der durch den PDCCH, der die SPS-Ressourcenfreigabe anzeigt, zur Freigabe angezeigt wird,
wenn der PDCCH, der die SPS-Ressourcenfreigabe anzeigt, die Freigabe eines SPS-PDSCH anzeigt, ist die Referenzzeitdomänenressource die Zeitdomänenressource, die dem freigegebenen SPS-PDSCH entspricht;
wenn der PDCCH, der die SPS-Ressourcenfreigabe anzeigt, die gemeinsame Freigabe einer Vielzahl von SPS-PDSCHs anzeigt, ist die Referenzzeitdomänenressource eine Zeitdomänenressource, die einem SPS-PDSCH mit einem minimalen oder maximalen SPS-Konfigurationsindex innerhalb der gemeinsam freigegebenen Vielzahl von SPS-PDSCHs entspricht, oder die Referenzzeitdomänenressource ist eine Zeitdomänenressource, die einem SPS-PDSCH entspricht, der im Schlitz mit einem minimalen oder maximalen SPS-Konfigurationsindex innerhalb der gemeinsam freigegebenen Vielzahl von SPS-PDSCHs übertragen wird;
wenn sich die Referenzzeitdomänenressource mit der Zeitdomänenressource eines Ziel-SPS-PDSCH innerhalb des zu empfangenden SPS-PDSCH überschneidet oder die Referenzzeitdomänenressource und ein Ziel-SPS-PDSCH innerhalb des zu empfangenden SPS-PDSCH dem gleichen Index der Downlink-Übertragungsmöglichkeit entsprechen, ist das Positionszuordnungsmodul (810) ferner konfiguriert zum:
Übertragen des PDCCH, der die SPS-Ressourcenfreigabe anzeigt, spätestens an der Position eines Startsymbols oder eines Endsymbols des Ziel-SPS-PDSCH.

13. Hybrid-Automatic-Repeat-Request-Acknowledgement-Rückmeldungsvorrichtung (HARQ-ACK-Rückmeldungsvorrichtung), angewendet auf eine Basisstation und umfassend:
ein Positionsbestimmungsmodul (910), das konfiguriert ist zum, wenn ein Physical Downlink Control Channel, PDCCH, der eine Semi-Persistent-Scheduling-Ressourcenfreigabe, SPS-Ressourcenfreigabe, anzeigt, in einem Schlitz für das Senden einer SPS-Physical-Downlink-Shared-Channel-Übertragung, SPS-PDSCH-Übertragung, gesendet wird und die Bedingungen erfüllt sind, dass der zu sendende SPS-PDSCH und der PDCCH, der die SPS-Ressourcenfreigabe anzeigt, die gleiche Priorität haben und der PDCCH, der die SPS-Ressourcenfreigabe anzeigt, und der zu sendende SPS-PDSCH im selben Schlitz oder Unterschlitz eine HARQ-ACK-Übertragung durchführen, Bestimmen, dass eine HARQ-ACK-Rückmeldung des PDCCH, der die SPS-Ressourcenfreigabe anzeigt, zu einer Rückmeldungsposition zugeordnet wird, die gemäß einer Referenzzeitdomänenressource in einer HARQ-ACK-Rückmeldungssequenz bestimmt wird;
ein Empfangsmodul (920), das konfiguriert ist, um die HARQ-ACK-Rückmeldungssequenz zu empfangen, die die HARQ-ACK-Rückmeldung des PDCCH umfasst, der die SPS-Ressourcenfreigabe anzeigt.

14. Vorrichtung nach Anspruch 13, wobei das Positionsbestimmungssmodul (910) ferner konfiguriert ist zum: Bestimmen, dass die HARQ-ACK-Rückmeldung des PDCCH, der die SPS-Ressourcenfreigabe anzeigt, zu der Rückmeldungsposition zugeordnet wird, die gemäß der Referenzzeitdomänenressource in der HARQ-ACK-Rückmeldungssequenz bestimmt wird, wenn eine erste Bedingung, die mindestens eine der folgenden Bedingungen ist, ferner erfüllt ist:
eine Summe aus einer Menge B1 des zu sendenden SPS-PDSCH und einer Menge B2 des PDCCH, der die SPS-Ressourcenfreigabe anzeigt, einen ersten Wert nicht überschreitet; wobei der erste Wert eine maximale Anzahl von Unicast-PDSCHs ist, die in einem Schlitz empfangen werden können;
eine Summe aus einer Menge B1 des zu sendenden SPS-PDSCH und einer Menge B2 des PDCCH, der die SPS-Ressourcenfreigabe anzeigt, einen zweiten Wert nicht überschreitet; wobei der zweite Wert eine Anzahl der Downlink-Übertragungsmöglichkeiten in dem Schlitz ist;
wobei B1 und B2 beide eine positive ganze Zahl größer oder gleich 1 sind;
und/oder
das Positionsbestimmungsmodul (910) ist ferner konfiguriert zum: Bestimmen, dass die HARQ-ACK-Rückmeldung des PDCCH, der die SPS-Ressourcenfreigabe anzeigt, zu der Rückmeldungsposition zugeordnet wird, die gemäß der Referenzzeitdomänenressource in der HARQ-ACK-Rückmeldungssequenz bestimmt wird, wenn eine zweite Bedingung erfüllt ist, die mindestens eine der folgenden Bedingungen ist:
eine erste zweite Bedingung ist eine der folgenden Bedingungen:
der durch den PDCCH, der die SPS-Ressourcenfreigabe anzeigt, zur Freigabe angezeigte SPS-PDSCH schließt keinen der zu sendenden SPS-PDSCH ein;
der zu sendende SPS-PDSCH schließt keinen Ziel-SPS-PDSCH ein; der Ziel-SPS-PDSCH ist der SPS-PDSCH mit einem minimalen oder maximalen SPS-Konfigurationsindex in dem SPS-PDSCH, der durch den PDCCH, der die SPS-Ressourcenfreigabe anzeigt, zur Freigabe angezeigt wird;
der zu sendende SPS-PDSCH umfasst einen Teil der SPS-PDSCHs, die durch den PDCCH, der die SPS-Ressourcenfreigabe anzeigt, zur Freigabe angezeigt werden;
eine vierte zweite Bedingung ist:
der zu sendende SPS-PDSCH und der PDCCH, der die SPS-Ressourcenfreigabe anzeigt, werden auf demselben Träger übertragen;
eine fünfte zweite Bedingung ist:
die maximale Anzahl von Unicast-PDSCH, die das Endgerät in einem Schlitz empfangen kann, ist größer als 1 oder gleich 1;
eine sechste zweite Bedingung ist:
das Endgerät konfiguriert einen Semi-Static-Hybrid-Automatic-Repeat-Request-Acknowledgement-Informationsübertragungsmodus.

15. Vorrichtung nach Anspruch 13, wobei das Positionsbestimmungsmodul (910) ferner konfiguriert ist zum:
Bestimmen der Referenzzeitdomänenressource als eine der folgenden:
eine durch den PDCCH, der die SPS-Ressourcenfreigabe anzeigt, angezeigte Zeitdomänenressource;
eine Zeitdomänenressource, die einem SPS-PDSCH entspricht, der durch den PDCCH, der die SPS-Ressourcenfreigabe anzeigt, zur Freigabe angezeigt wird;
und/oder
die Referenzzeitdomänenressource überschneidet sich nicht mit der Zeitdomänenressource des zu empfangenden SPS-PDSCH, oder die Referenzzeitdomänenressource und der zu empfangende SPS-PDSCH entsprechen nicht demselben Index der Downlink-Übertragungsmöglichkeit;
oder
das Positionsbestimmungsmodul (910) ist ferner konfiguriert zum: wenn sich die Referenzzeitdomänenressource mit der Zeitdomänenressource eines Ziel-SPS-PDSCH innerhalb des zu empfangenden SPS-PDSCH überschneidet oder die Referenzzeitdomänenressource und ein Ziel-SPS-PDSCH innerhalb des zu empfangenden SPS-PDSCH dem gleichen Index der Downlink-Übertragungsmöglichkeit entsprechen, Nicht-Durchführen einer HARQ-ACK-Rückmeldung für den Ziel-SPS-PDSCH;
und/oder
die Referenzzeitdomänenressource kollidiert nicht mit einem Uplink-Symbol im Schlitz;
wobei der zu empfangende SPS-PDSCH mindestens eine der folgenden Bedingungen erfüllt:
der SPS-PDSCH ist ein SPS-PDSCH, für den eine HARQ-ACK-Rückmeldung erforderlich ist;
es wird bestimmt, dass der SPS-PDSCH nicht mit einem Uplink-Symbol gemäß einer durch eine High-Layer-Signalisierung konfigurierten Schlitzstruktur kollidiert.

16. Vorrichtung nach Anspruch 15, wobei die Referenzzeitdomänenressource eine Zeitdomänenressource ist, die einem SPS-PDSCH entspricht, der durch den PDCCH, der die SPS-Ressourcenfreigabe anzeigt, zur Freigabe angezeigt wird,
wenn der PDCCH, der die SPS-Ressourcenfreigabe anzeigt, die Freigabe eines SPS-PDSCH anzeigt, ist die Referenzzeitdomänenressource die Zeitdomänenressource, die dem freigegebenen SPS-PDSCH entspricht;
wenn der PDCCH, der die SPS-Ressourcenfreigabe anzeigt, die gemeinsame Freigabe einer Vielzahl von SPS-PDSCHs anzeigt, ist die Referenzzeitdomänenressource eine Zeitdomänenressource, die einem SPS-PDSCH mit einem minimalen oder maximalen SPS-Konfigurationsindex innerhalb der gemeinsam freigegebenen Vielzahl von SPS-PDSCHs entspricht, oder die Referenzzeitdomänenressource ist eine Zeitdomänenressource, die einem SPS-PDSCH entspricht, der im Schlitz mit einem minimalen oder maximalen SPS-Konfigurationsindex innerhalb des Schlitzes in der gemeinsam freigegebenen Vielzahl von SPS-PDSCHs übertragen wird;
wenn sich die Referenzzeitdomänenressource mit der Zeitdomänenressource eines Ziel-SPS-PDSCH innerhalb des zu empfangenden SPS-PDSCH überschneidet oder die Referenzzeitdomänenchsressource und ein Ziel-SPS-PDSCH innerhalb des zu empfangenden SPS-PDSCH dem gleichen Index der Downlink-Übertragungsmöglichkeit entsprechen, ist das Positionsbestimmungsmodul (910) ferner konfiguriert zum:
Übertragen des PDCCH, der die SPS-Ressourcenfreigabe anzeigt, spätestens an der Position eines Startsymbols oder eines Endsymbols des Ziel-SPS-PDSCH.

## Revendications

1. Procédé de rétroaction d'accusé de réception de demande de répétition automatique hybride, HARQ-ACK, réalisé par un terminal, le procédé comprenant :
si un canal de commande de liaison descendante physique, PDCCH, indiquant une libération de ressource de planification semi-persistante, SPS, est reçu dans un créneau de réception d'une transmission de canal partagé de liaison descendante physique, PDSCH, SPS, et que les conditions selon lesquelles le SPS PDSCH à recevoir et le PDCCH indiquant la libération de ressource SPS ont la même priorité, et le PDCCH indiquant la libération de ressource SPS et le SPS PDSCH à recevoir réalisent une transmission HARQ-ACK dans le même créneau ou sous-créneau sont satisfaites, la mise en correspondance (S210) d'une rétroaction HARQ-ACK du PDCCH indiquant la libération de ressource SPS avec une position de rétroaction déterminée selon une ressource dans le domaine temporel de référence dans une séquence de rétroaction HARQ-ACK ;
la transmission (S220) de la séquence de rétroaction HARQ-ACK comprenant la rétroaction HARQ-ACK du PDCCH indiquant la libération de ressource SPS.

2. Procédé de rétroaction HARQ-ACK selon la revendication 1, dans lequel le procédé comprend en outre : la mise en correspondance de la rétroaction HARQ-ACK du PDCCH indiquant la libération de ressource SPS avec la position de rétroaction déterminée selon la ressource dans le domaine temporel de référence dans la séquence de rétroaction HARQ-ACK lorsqu'une première condition correspondant à au moins l'une parmi les conditions suivantes est en outre satisfaite :
une somme d'une quantité B1 du SPS PDSCH à recevoir et d'une quantité B2 du PDCCH indiquant la libération de ressource SPS ne dépasse pas une première valeur ; dans lequel la première valeur est une quantité maximale de PDSCH de monodiffusion pouvant être reçus dans un créneau ;
une somme d'une quantité B1 du SPS PDSCH à recevoir et d'une quantité B2 du PDCCH indiquant la libération de ressource SPS ne dépasse pas une seconde valeur ; dans lequel la seconde valeur est une quantité d'opportunités de transmission de liaison descendante dans le créneau ;
dans lequel B1 et B2 sont tous deux des entiers positifs supérieurs ou égaux à 1 ;
et/ou
le procédé comprend en outre : la mise en correspondance de la rétroaction HARQ-ACK du PDCCH indiquant la libération de ressource SPS avec la position de rétroaction déterminée selon la ressource dans le domaine temporel de référence dans la séquence de rétroaction HARQ-ACK lorsqu'une seconde condition correspondant à au moins l'une parmi les conditions suivantes est satisfaite :
une première seconde condition est l'une des conditions suivantes :
le SPS PDSCH indiqué comme devant être libéré par le PDCCH indiquant la libération de ressource SPS ne comporte aucun des SPS PDSCH à recevoir ;
le SPS PDSCH à recevoir ne comporte pas de SPS PDSCH cible ; le SPS PDSCH cible est le SPS PDSCH avec un indice de configuration SPS minimal ou maximal dans le SPS PDSCH indiqué comme devant être libéré par le PDCCH indiquant la libération de ressource SPS ;
le SPS PDSCH à recevoir comprend une partie des SPS PDSCH indiqués comme devant être libérés par le PDCCH indiquant la libération de ressource SPS ;
une quatrième seconde condition est :
le SPS PDSCH à recevoir et le PDCCH indiquant la libération de ressource SPS sont transmis sur la même porteuse ;
une cinquième seconde condition est :
une quantité maximale de PDSCH de monodiffusion pouvant être reçue par le terminal dans un créneau est supérieure à 1 ou égale à 1 ;
une sixième seconde condition est :
le terminal configure un mode de transmission d'informations d'accusé de réception de demande de répétition automatique hybride semi-statique.

3. Procédé de rétroaction HARQ-ACK selon la revendication 1, dans lequel le procédé comprend en outre :
la détermination de la ressource dans le domaine temporel de référence comme l'une des suivantes :
une ressource dans le domaine temporel indiquée par le PDCCH indiquant la libération de ressource SPS ;
une ressource dans le domaine temporel correspondant à un SPS PDSCH indiqué comme devant être libéré par le PDCCH indiquant la libération de ressource SPS ;
et/ou
la ressource dans le domaine temporel de référence n'est pas superposée à la ressource dans le domaine temporel du SPS PDSCH à recevoir, ou la ressource dans le domaine temporel de référence et le SPS PDSCH à recevoir ne correspondent pas au même indice d'opportunité de transmission de liaison descendante ;
ou,
lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même indice d'opportunité de transmission de liaison descendante, le fait de ne pas réaliser de rétroaction HARQ-ACK pour le SPS PDSCH cible ;
et/ou
la ressource dans le domaine temporel de référence n'entre pas en collision avec un symbole de liaison montante dans le créneau ;
dans lequel le SPS PDSCH à recevoir satisfait au moins l'une parmi les conditions suivantes :
le SPS PDSCH est un SPS PDSCH pour lequel une rétroaction HARQ-ACK est nécessaire ;
le SPS PDSCH est déterminé comme n'entrant pas en collision avec un symbole de liaison montante selon une structure de créneau configurée par une signalisation de couche supérieure.

4. Procédé de rétroaction HARQ-ACK selon la revendication 3, dans lequel, lorsque la ressource dans le domaine temporel de référence est la ressource dans le domaine temporel correspondant à un SPS PDSCH indiqué comme devant être libéré par le PDCCH indiquant une libération de ressource SPS,
lorsque le PDCCH indiquant la libération de ressource SPS indique la libération d'un SPS PDSCH, la ressource dans le domaine temporel de référence est la ressource dans le domaine temporel correspondant au SPS PDSCH libéré ;
lorsque le PDCCH indiquant la libération de ressource SPS indique la libération conjointe d'une pluralité de SPS PDSCH, la ressource dans le domaine temporel de référence est une ressource dans le domaine temporel correspondant à un SPS PDSCH avec un indice de configuration SPS minimal ou maximal dans la pluralité libérée conjointement de SPS PDSCH, ou la ressource dans le domaine temporel de référence est une ressource dans le domaine temporel correspondant à un SPS PDSCH transmis dans le créneau avec un indice de configuration SPS minimal ou maximal dans la pluralité libérée conjointement de SPS PDSCH ;
le fait de ne pas réaliser de rétroaction HARQ-ACK pour le SPS PDSCH cible lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même index d'opportunité de transmission de liaison descendante comprend en outre :
la transmission du PDCCH indiquant la libération de ressource SPS, au plus tard à une position d'un symbole de début ou d'un symbole de fin du SPS PDSCH cible.

5. Procédé de rétroaction d'accusé de réception de demande de répétition automatique hybride, HARQ-ACK, réalisé par une station de base, le procédé comprenant :
si un canal de commande de liaison descendante physique, PDCCH, indiquant une libération de ressource de planification semi-persistante, SPS, est envoyé dans un créneau d'envoi d'une transmission de canal partagé de liaison descendante physique, PDSCH, SPS et si des conditions selon lesquelles le SPS PDSCH à envoyer et le PDCCH indiquant la libération de ressource SPS ont la même priorité et le PDCCH indiquant la libération de ressource SPS et le SPS PDSCH à envoyer réalisent une transmission HARQ-ACK dans le même créneau ou le même sous-créneau sont satisfaites, le fait déterminer (S410) qu'une rétroaction HARQ-ACK du PDCCH indiquant la libération de ressource SPS est mis en correspondance avec une position de rétroaction déterminée selon une ressource dans le domaine temporel de référence dans une séquence de rétroaction HARQ-ACK ;
la réception (S420) de la séquence de rétroaction HARQ-ACK comprenant la rétroaction HARQ- ACK du PDCCH indiquant la libération de ressource SPS.

6. Procédé de de rétroaction HARQ-ACK selon la revendication 5, dans lequel le procédé comprend en outre : le fait de déterminer que la rétroaction HARQ-ACK du PDCCH indiquant la libération de ressource SPS est mise en correspondance avec la position de rétroaction déterminée selon la ressource dans le domaine temporel de référence dans la séquence de rétroaction HARQ-ACK lorsqu'une première condition correspondant à au moins l'une parmi les conditions suivantes est en outre satisfaite :
une somme d'une quantité B1 du SPS PDSCH à envoyer et d'une quantité B2 du PDCCH indiquant la libération de ressource SPS ne dépasse pas une première valeur ; dans lequel la première valeur est une quantité maximale de PDSCH de monodiffusion pouvant être reçus dans un créneau ;
une somme d'une quantité B1 du SPS PDSCH à envoyer et d'une quantité B2 du PDCCH indiquant la libération de ressource SPS ne dépasse pas une seconde valeur ; dans lequel la seconde valeur est une quantité d'opportunités de transmission de liaison descendante dans le créneau ;
dans lequel B1 et B2 sont tous deux des entiers positifs supérieurs ou égaux à 1 ;
et/ou
le procédé comprend en outre : le fait de déterminer que la rétroaction HARQ-ACK du PDCCH indiquant la libération de ressource SPS est mis en correspondance avec la position de rétroaction déterminée selon la ressource dans le domaine temporel de référence dans la séquence de rétroaction HARQ-ACK lorsqu'une seconde condition correspondant à au moins l'une parmi les conditions suivantes est en outre satisfaite :
une première seconde condition est l'une des conditions suivantes :
le SPS PDSCH indiqué comme devant être libéré par le PDCCH indiquant la libération de ressource SPS ne comporte aucun des SPS PDSCH à envoyer ;
le SPS PDSCH à envoyer ne comporte pas de SPS PDSCH cible ; le SPS PDSCH cible est le SPS PDSCH avec un indice de configuration SPS minimal ou maximal dans le SPS PDSCH indiqué comme devant être libéré par le PDCCH indiquant la libération de ressource SPS ;
le SPS PDSCH à envoyer comprend une partie des SPS PDSCH indiqués comme devant être libérés par le PDCCH indiquant la libération de ressource SPS ;
une quatrième seconde condition est :
le SPS PDSCH à envoyer et le PDCCH indiquant la libération de ressource SPS sont transmis sur la même porteuse ;
une cinquième seconde condition est :
une quantité maximale de PDSCH de monodiffusion pouvant être reçue par le terminal dans un créneau est supérieure à 1 ou égale à 1 ;
une sixième seconde condition est :
le terminal configure un mode de transmission d'informations d'accusé de réception de demande de répétition automatique hybride semi-statique.

7. Procédé de rétroaction HARQ-ACK selon la revendication 5, dans lequel le procédé comprend en outre :
la détermination de la ressource dans le domaine temporel de référence comme l'une des suivantes :
une ressource dans le domaine temporel indiquée par le PDCCH indiquant la libération de ressource SPS ;
une ressource dans le domaine temporel correspondant à un SPS PDSCH indiqué comme devant être libéré par le PDCCH indiquant la libération de ressource SPS ;
et/ou
la ressource dans le domaine temporel de référence n'est pas superposée à la ressource dans le domaine temporel du SPS PDSCH à recevoir, ou la ressource dans le domaine temporel de référence et le SPS PDSCH à recevoir ne correspondent pas au même indice d'opportunité de transmission de liaison descendante ;
ou,
lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même indice d'opportunité de transmission de liaison descendante, le fait de ne pas réaliser de rétroaction HARQ-ACK pour le SPS PDSCH cible ;
et/ou
la ressource dans le domaine temporel de référence n'entre pas en collision avec un symbole de liaison montante dans le créneau ;
dans lequel le SPS PDSCH à recevoir satisfait au moins l'une parmi les conditions suivantes :
le SPS PDSCH est un SPS PDSCH pour lequel une rétroaction HARQ-ACK est nécessaire ;
le SPS PDSCH est déterminé comme n'entrant pas en collision avec un symbole de liaison montante selon une structure de créneau configurée par une signalisation de couche supérieure.

8. Procédé de rétroaction HARQ-ACK selon la revendication 7, dans lequel, lorsque la ressource dans le domaine temporel de référence est une ressource dans le domaine temporel correspondant à un SPS PDSCH indiqué comme devant être libéré par le PDCCH indiquant la libération de ressource SPS, le procédé comprend en outre :
lorsque le PDCCH indiquant la libération de ressource SPS indique la libération d'un SPS PDSCH, la ressource dans le domaine temporel de référence est la ressource dans le domaine temporel correspondant au SPS PDSCH libéré ;
lorsque le PDCCH indiquant la libération de ressource SPS indique la libération conjointe d'une pluralité de SPS PDSCH, la ressource dans le domaine temporel de référence est une ressource dans le domaine temporel correspondant à un SPS PDSCH avec un indice de configuration SPS minimal ou maximal dans la pluralité libérée conjointement de SPS PDSCH, ou la ressource dans le domaine temporel de référence est une ressource dans le domaine temporel correspondant à un SPS PDSCH transmis dans le créneau avec un indice de configuration SPS minimal ou maximal dans le créneau dans la pluralité libérée conjointement de SPS PDSCH ;
le fait de ne pas réaliser de rétroaction HARQ-ACK pour le SPS PDSCH cible lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même index d'opportunité de transmission de liaison descendante comprend en outre :
la transmission du PDCCH indiquant la libération de ressource SPS, au plus tard à une position d'un symbole de début ou d'un symbole de fin du SPS PDSCH cible.

9. Dispositif de rétroaction d'accusé de réception de demande de répétition automatique hybride, HARQ-ACK, appliqué à un terminal et comprenant :
un module de mise en correspondance de position (810), configuré pour, si un canal de commande de liaison descendante physique, PDCCH, indiquant une libération de ressource de planification semi-persistante, SPS, est reçu dans un créneau pour recevoir une transmission de canal partagé de liaison descendante physique, PDSCH, SPS, et si les conditions selon lesquelles le SPS PDSCH à recevoir et le PDCCH indiquant la libération de ressource SPS ont la même priorité sont satisfaites, et le PDCCH indiquant la libération de ressource SPS et le SPS PDSCH à recevoir réalisent une transmission HARQ-ACK dans le même créneau ou sous-créneau sont satisfaites, mettre en correspondance une rétroaction HARQ-ACK du PDCCH indiquant la libération de ressource SPS, avec une position de rétroaction déterminée selon une ressource dans le domaine temporel de référence dans une séquence de rétroaction HARQ-ACK ;
un module de transmission (820), configuré pour transmettre la séquence de rétroaction HARQ-ACK comprenant la rétroaction HARQ-ACK du PDCCH indiquant la libération de ressource SPS.

10. Dispositif selon la revendication 9, dans lequel le module de mise en correspondance de position (810) est en outre configuré pour : mettre en correspondance la rétroaction HARQ-ACK du PDCCH indiquant la libération de ressource SPS avec la position de rétroaction déterminée selon la ressource dans le domaine temporel de référence dans la séquence de rétroaction HARQ-ACK lorsqu'une première condition correspondant à au moins l'une parmi les conditions suivantes est en outre satisfaite :
une somme d'une quantité B1 du SPS PDSCH à recevoir et d'une quantité B2 du PDCCH indiquant la libération de ressource SPS ne dépasse pas une première valeur ; dans lequel la première valeur est une quantité maximale de PDSCH de monodiffusion pouvant être reçus dans un créneau ;
une somme d'une quantité B1 du SPS PDSCH à recevoir et d'une quantité B2 du PDCCH indiquant la libération de ressource SPS ne dépasse pas une seconde valeur ; dans lequel la seconde valeur est une quantité d'opportunités de transmission de liaison descendante dans le créneau ;
dans lequel B1 et B2 sont tous deux des entiers positifs supérieurs ou égaux à 1 ;
et/ou
le module de mise en correspondance de position (810) est en outre configuré pour : mettre en correspondance la rétroaction HARQ-ACK du PDCCH indiquant la libération de ressource SPS avec la position de rétroaction déterminée selon la ressource dans le domaine temporel de référence dans la séquence de rétroaction HARQ-ACK lorsqu'une seconde condition correspondant à au moins l'une parmi les conditions suivantes est en outre satisfaite :
une première seconde condition est l'une des conditions suivantes :
le SPS PDSCH indiqué comme devant être libéré par le PDCCH indiquant la libération de ressource SPS ne comporte aucun des SPS PDSCH à recevoir ;
le SPS PDSCH à recevoir ne comporte pas de SPS PDSCH cible ; le SPS PDSCH cible est le SPS PDSCH avec un indice de configuration SPS minimal ou maximal dans le SPS PDSCH indiqué comme devant être libéré par le PDCCH indiquant la libération de ressource SPS ;
le SPS PDSCH à recevoir comprend une partie des SPS PDSCH indiqués comme devant être libérés par le PDCCH indiquant la libération de ressource SPS ;
une quatrième seconde condition est :
le SPS PDSCH à recevoir et le PDCCH indiquant la libération de ressource SPS sont transmis sur la même porteuse ;
une cinquième seconde condition est :
une quantité maximale de PDSCH de monodiffusion pouvant être reçue par le terminal dans un créneau est supérieure à 1 ou égale à 1 ;
une sixième seconde condition est :
le terminal configure un mode de transmission d'informations d'accusé de réception de demande de répétition automatique hybride semi-statique.

11. Dispositif selon la revendication 9, dans lequel le module de mise en correspondance de position (810) est en outre configuré pour :
déterminer la ressource dans le domaine temporel de référence comme l'une des suivantes :
une ressource dans le domaine temporel indiquée par le PDCCH indiquant la libération de ressource SPS ;
une ressource dans le domaine temporel correspondant à un SPS PDSCH indiqué comme devant être libéré par le PDCCH indiquant la libération de ressource SPS ;
et/ou
la ressource dans le domaine temporel de référence n'est pas superposée à la ressource dans le domaine temporel du SPS PDSCH à recevoir, ou la ressource dans le domaine temporel de référence et le SPS PDSCH à recevoir ne correspondent pas au même indice d'opportunité de transmission de liaison descendante ;
ou,
le module de mise en correspondance de position (810) est en outre configuré pour : lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même indice d'opportunité de transmission de liaison descendante, ne pas réaliser de rétroaction HARQ-ACK pour le SPS PDSCH cible ;
et/ou
la ressource dans le domaine temporel de référence n'entre pas en collision avec un symbole de liaison montante dans le créneau ;
dans lequel le SPS PDSCH à recevoir satisfait au moins l'une parmi les conditions suivantes :
le SPS PDSCH est un SPS PDSCH pour lequel une rétroaction HARQ-ACK est nécessaire ;
le SPS PDSCH est déterminé comme n'entrant pas en collision avec un symbole de liaison montante selon une structure de créneau configurée par une signalisation de couche supérieure.

12. Dispositif selon la revendication 11, dans lequel, lorsque la ressource dans le domaine temporel de référence est la ressource dans le domaine temporel correspondant à un SPS PDSCH indiqué comme devant être libéré par le PDCCH indiquant une libération de ressource SPS,
lorsque le PDCCH indiquant la libération de ressource SPS indique la libération d'un SPS PDSCH, la ressource dans le domaine temporel de référence est la ressource dans le domaine temporel correspondant au SPS PDSCH libéré ;
lorsque le PDCCH indiquant la libération de ressource SPS indique la libération conjointe d'une pluralité de SPS PDSCH, la ressource dans le domaine temporel de référence est une ressource dans le domaine temporel correspondant à un SPS PDSCH avec un indice de configuration SPS minimal ou maximal dans la pluralité libérée conjointement de SPS PDSCH, ou la ressource dans le domaine temporel de référence est une ressource dans le domaine temporel correspondant à un SPS PDSCH transmis dans le créneau avec un indice de configuration SPS minimal ou maximal dans la pluralité libérée conjointement de SPS PDSCH ;
lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même index d'opportunité de transmission de liaison descendante, le module de mise en correspondance de position (810) est en outre configuré pour :
transmettre le PDCCH indiquant la libération de ressource SPS, au plus tard à une position d'un symbole de début ou d'un symbole de fin du SPS PDSCH cible.

13. Dispositif de rétroaction d'accusé de réception de demande de répétition automatique hybride (HARQ-ACK), appliqué à une station de base et comprenant :
un module de détermination de position (910), configuré pour, si un canal de commande de liaison descendante physique, PDCCH, indiquant une libération de ressource de planification semi-persistante, SPS, est envoyé dans un créneau d'envoi d'une transmission de canal partagé de liaison descendante physique, PDSCH, SPS, et que les conditions selon lesquelles le SPS PDSCH à envoyer et le PDCCH indiquant la libération de ressource SPS ont la même priorité et le PDCCH indiquant la libération de ressource SPS et le SPS PDSCH à envoyer réalisent une transmission HARQ-ACK dans le même créneau ou sous-créneau sont satisfaites, déterminer qu'une rétroaction HARQ-ACK du PDCCH indiquant la libération de ressource SPS est mis en correspondance avec une position de rétroaction déterminée selon une ressource dans le domaine temporel de référence dans une séquence de rétroaction HARQ-ACK ;
un module de réception (920), configuré pour recevoir la séquence de rétroaction HARQ-ACK comprenant la rétroaction HARQ-ACK du PDCCH indiquant la libération de ressource SPS.

14. Dispositif selon la revendication 13, dans lequel le module de détermination de position (910) est en outre configuré pour : déterminer que la rétroaction HARQ-ACK du PDCCH indiquant la libération de ressource SPS est mise en correspondance avec la position de rétroaction déterminée selon la ressource dans le domaine temporel de référence dans la séquence de rétroaction HARQ-ACK lorsqu'une première condition correspondant à au moins l'une parmi les conditions suivantes est en outre satisfaite :
une somme d'une quantité B1 du SPS PDSCH à envoyer et d'une quantité B2 du PDCCH indiquant la libération de ressource SPS ne dépasse pas une première valeur ; dans lequel la première valeur est une quantité maximale de PDSCH de monodiffusion pouvant être reçus dans un créneau ;
une somme d'une quantité B1 du SPS PDSCH à envoyer et d'une quantité B2 du PDCCH indiquant la libération de ressource SPS ne dépasse pas une seconde valeur ; dans lequel la seconde valeur est une quantité d'opportunités de transmission de liaison descendante dans le créneau ;
dans lequel B1 et B2 sont tous deux des entiers positifs supérieurs ou égaux à 1 ;
et/ou
le module de détermination de position (910) est en outre configuré pour : déterminer que la rétroaction HARQ-ACK du PDCCH indiquant la libération de ressource SPS est mis en correspondance avec la position de rétroaction déterminée selon la ressource dans le domaine temporel de référence dans la séquence de rétroaction HARQ-ACK lorsqu'une seconde condition correspondant à au moins l'une parmi les conditions suivantes est en outre satisfaite :
une première seconde condition est l'une des conditions suivantes :
le SPS PDSCH indiqué comme devant être libéré par le PDCCH indiquant la libération de ressource SPS ne comporte aucun des SPS PDSCH à envoyer ;
le SPS PDSCH à envoyer ne comporte pas de SPS PDSCH cible ; le SPS PDSCH cible est le SPS PDSCH avec un indice de configuration SPS minimal ou maximal dans le SPS PDSCH indiqué comme devant être libéré par le PDCCH indiquant la libération de ressource SPS ;
le SPS PDSCH à envoyer comprend une partie des SPS PDSCH indiqués comme devant être libérés par le PDCCH indiquant la libération de ressource SPS ;
une quatrième seconde condition est :
le SPS PDSCH à envoyer et le PDCCH indiquant la libération de ressource SPS sont transmis sur la même porteuse ;
une cinquième seconde condition est :
une quantité maximale de PDSCH de monodiffusion pouvant être reçue par le terminal dans un créneau est supérieure à 1 ou égale à 1 ;
une sixième seconde condition est :
le terminal configure un mode de transmission d'informations d'accusé de réception de demande de répétition automatique hybride semi-statique.

15. Dispositif selon la revendication 13, dans lequel le module de détermination de position (910) est en outre configuré pour :
déterminer la ressource dans le domaine temporel de référence comme l'une des suivantes :
une ressource dans le domaine temporel indiquée par le PDCCH indiquant la libération de ressource SPS ;
une ressource dans le domaine temporel correspondant à un SPS PDSCH indiqué comme devant être libéré par le PDCCH indiquant la libération de ressource SPS ;
et/ou
la ressource dans le domaine temporel de référence n'est pas superposée à la ressource dans le domaine temporel du SPS PDSCH à recevoir, ou la ressource dans le domaine temporel de référence et le SPS PDSCH à recevoir ne correspondent pas au même indice d'opportunité de transmission de liaison descendante ;
ou,
le module de détermination de position (910) est en outre configuré pour : lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même indice d'opportunité de transmission de liaison descendante, ne pas réaliser de rétroaction HARQ-ACK pour le SPS PDSCH cible ;
et/ou
la ressource dans le domaine temporel de référence n'entre pas en collision avec un symbole de liaison montante dans le créneau ;
dans lequel le SPS PDSCH à recevoir satisfait au moins l'une parmi les conditions suivantes :
le SPS PDSCH est un SPS PDSCH pour lequel une rétroaction HARQ-ACK est nécessaire ;
le SPS PDSCH est déterminé comme n'entrant pas en collision avec un symbole de liaison montante selon une structure de créneau configurée par une signalisation de couche supérieure.

16. Dispositif selon la revendication 15, dans lequel, lorsque la ressource dans le domaine temporel de référence est une ressource dans le domaine temporel correspondant à un SPS PDSCH indiqué comme devant être libéré par le PDCCH indiquant la libération de ressource SPS,
lorsque le PDCCH indiquant la libération de ressource SPS indique la libération d'un SPS PDSCH, la ressource dans le domaine temporel de référence est la ressource dans le domaine temporel correspondant au SPS PDSCH libéré ;
lorsque le PDCCH indiquant la libération de ressource SPS indique la libération conjointe d'une pluralité de SPS PDSCH, la ressource dans le domaine temporel de référence est une ressource dans le domaine temporel correspondant à un SPS PDSCH avec un indice de configuration SPS minimal ou maximal dans la pluralité libérée conjointement de SPS PDSCH, ou la ressource dans le domaine temporel de référence est une ressource dans le domaine temporel correspondant à un SPS PDSCH transmis dans le créneau avec un indice de configuration SPS minimal ou maximal dans le créneau dans la pluralité libérée conjointement de SPS PDSCH ;
lorsque la ressource dans le domaine temporel de référence est superposée à la ressource dans le domaine temporel d'un SPS PDSCH cible dans le SPS PDSCH à recevoir ou que la ressource dans le domaine temporel de référence et un SPS PDSCH cible dans le SPS PDSCH à recevoir correspondent au même indice d'opportunité de transmission de liaison descendante, le module de détermination de position (910) est en outre configuré pour :
transmettre le PDCCH indiquant la libération de ressource SPS, au plus tard à une position d'un symbole de début ou d'un symbole de fin du SPS PDSCH cible.
